# EUROPEAN PATENT SPECIFICATION

(11) **EP 3 237 568 B1**
(45) Date of publication and mention of the grant of the patent: **16.09.2020**
(21) Application number: 15820397.6
(22) Date of filing: 14.12.2015
(51) Int. Cl.: C09J 133/08

(54) **TACKIFIED ACRYLATE PRESSURE SENSITIVE ADHESIVES WITH LOW ACID CONTENT**
KLEBRIG GEMACHTE ACRYLATHAFTKLEBSTOFFE MIT NIEDRIGEM SÄUREGEHALT
ADHÉSIFS ACRYLIQUES SENSIBLES À LA PRESSION TACKIFIES A FAIBLE TENEUR D'ACIDE

(30) Priority: 22.12.2014 US 201462095397 P
(43) Date of publication of application: 01.11.2017
(73) Proprietor: 3M Innovative Properties Company, St. Paul, MN 55133-3427 (US)
(72) Inventor: D'HAESE, Francois C., 1831 Diegem (BE); D'HOLLANDER, Stijn, 1831 Diegem (BE); STEGMAIER, Petra M., 41453 Neuss (DE); VRANCKEN, Michel A., 1831 Diegem (BE); AIT LHADJ, Rachid M., 1831 Diegem (BE)
(74) Representative: Vossius & Partner Patentanwälte Rechtsanwälte mbB
(86) International application number: PCT/US2015/065632
(87) International publication number: WO 2016/106003

(56) References cited:
- EP-A1- 2 733 186
- WO-A1-2012/044529
- US-A- 5 686 504

## Description

### Technical Field

The present disclosure relates generally to the field of adhesives, more specifically to the field of photocrosslinked pressure sensitive adhesives which contain relatively high levels of tackifying agents. The present disclosure is also directed to a method of preparing highly tackified photocrosslinked pressure sensitive adhesives.

### Background

Adhesives have been used for a variety of marking, holding, protecting, sealing and masking purposes. Adhesive tapes generally comprise a backing, or substrate, and an adhesive. One type of adhesive, a pressure sensitive adhesive, is particularly preferred for many applications. Pressure sensitive adhesives (PSA's) are well known to one of ordinary skill in the art to possess certain properties at room temperature including the following: (1) aggressive and permanent tack, (2) adherence with no more than finger pressure, (3) sufficient ability to hold onto an adherend, and (4) sufficient cohesive strength.

Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are natural rubber, synthetic rubbers (e.g., styrene/butadiene copolymers (SBR) and styrene/isoprene/styrene (SIS) block copolymers), various (meth)acrylate (e.g., acrylate and methacrylate) copolymers and silicones.

General purpose tapes which stick to all types of surfaces and especially pressure sensitive adhesives which stick very well to Low Surface Energy substrates typically require addition of high amounts of tackifying resins. PSA's prepared from solution polymer may compensate for the reduced cohesive strength, due to the presence of low molecular weight tackifying resin, with appropriate addition of crosslinkers or increased molecular weight of the polymer. In hot melt processable formulations though, the polymer has to be able to flow sufficiently at extruder temperature and therefore the maximum molecular weight is limited. Furthermore, the combination with thermal crosslinkers to create a higher cohesive strength via an increase of the molecular weight and the creation of a chemical network is not always practical because of its potential implications during hotmelt processing.

It is known that crosslinking of polymers produces polymer networks which have quite different mechanical and physical properties compared to their uncrosslinked linear or branched counterparts. For example, polymer networks can show such unique and highly desirable properties as solvent resistance, high cohesive strength, and elastomeric character.

Crosslinked polymers can be made in situ during formation of the desired polymer product. Many patents are known describing techniques to achieve efficient crosslink mechanisms and good cohesive strength properties. Therefore, the problems associated with solvent and bulk processing of crosslinked materials may be avoided through the use of actinic radiation processing. U.S. Pat. No. 4,379,201 (Heilmann et al.) discloses an example of a class of polyacrylic-functional crosslinkers used in the photocuring of (meth)acrylate copolymers.

U.S. Pat. Nos. 4,391,687 (Vesley) and 4,330,590 (Vesley) describe a class of fast curing triazine photocrosslinkers which, when mixed with an acrylic monomer and, optionally, a monoethylenically unsaturated monomer, and exposed to UV radiation, forms a crosslinked polyacrylate. The crosslinks formed by both the (meth)acrylates and the triazines in these copolymerizations prevent any further processing, such as hot melt coating, reactive extrusion, or solution coating processes, following the initial photopolymerization. However, since further processing of the polymer product is often necessary, it is more typical to start from the linear or branched polymer which, in the final processing step, is cured to a crosslinked material. The curing or crosslinking step is typically activated by moisture, thermal energy or actinic radiation. The latter has found widespread applications, particularly in the use of ultraviolet light as the radiation source.

In the past, a variety of different materials have been used as crosslinking agents using actinic radiation, e.g. polyfunctional acrylates, acetophenones, benzophenones, and triazines. The foregoing crosslinking agents may however possess certain drawbacks which include one or more of the following: high volatility; incompatibility with certain polymer systems; generation of corrosive or toxic byproducts; generation of undesirable color; requirement of a separate photoactive compound to initiate the crosslinking reaction and high sensitivity to oxygen.

In addition to actinic radiation processing described above, acrylate PSAs can be applied to substrates by solvent and hot-melt coating techniques. Although solvent coating techniques are widely used, hot-melt coating techniques may provide some environmental and economical advantages. However, unlike solvent coating techniques where the polymer coating and crosslinking are performed simultaneously, hot-melt coating requires that coating and crosslinking be performed sequentially. This is due to competing considerations: a polymer should not be highly crosslinked if it is to be hot-melt coated smoothly, yet the polymer needs to be crosslinked to achieve certain desirable performance properties such as e.g. high shear when the polymer is a PSA. Therefore, hot-melt coating is performed prior to crosslinking of the coated polymer.

Because hot-melt coating techniques involve high amounts of thermal energy and shear, the subsequent crosslinking procedure usually involves non-thermal energy sources. Electron beam (e-beam) and ultraviolet (UV) energy sources have been used traditionally, although e-beam techniques often are too energy intensive to be practical. Accordingly, much interest has been focused on UV radiation crosslinking of polymers.

UV radiation crosslinking of coated polymers has relied almost exclusively on hydrogen abstraction techniques in which a hydrogen abstracting agent, such as e.g. benzophenone or anthraquinone, is blended into the coated mixture prior to or during the coating process, and the mixture is then exposed to appropriate UV radiation. Certain polyfunctional benzophenones have been investigated as photocrosslinking agents and/or photosensitizers in various photopolymerizable systems.

Also, when a tackifying resin is present in the PSA formulation, especially in a relatively high amount, a large fraction of the exposed UV light during the crosslinking step is absorbed by the tackifying resin/photocrosslinker system which may result in reduced crosslinking efficiency and poor cohesive strength of the resulting PSA. When radiation crosslinking is used to crosslink tackified PSA formulations, the tackifying resin may provoke several other deleterious effects such as e.g. undesired chain transfer or chain termination reactions. The use of high levels of tackifying agent(s) may be desirable because it can increase the tackiness of the pressure sensitive adhesive, making it aggressively adhere to wide range of substrates. The addition of tackifying resin, especially high levels of tackifying resin, may detrimentally affect the shear and cohesive strength of a pressure sensitive adhesive, and may even raise the Tg of the adhesive. The use of high levels of tackifying resin may be particularly detrimental to hot melt processable pressure sensitive adhesives.

U.S. Pat. No. 4,737,559 (Kellen et al.) discloses a PSA which is a copolymer of an acrylate monomer and a copolymerizable mono-ethylenically unsaturated aromatic ketone comonomer free of ortho-aromatic hydroxyl groups. WO-A1-97/40090 (Stark et al.) describes a radiation crosslinkable composition comprising: a) a radiation crosslinkable polymer having abstractable hydrogen atoms and radiation-activatable crosslinking groups capable of abstracting hydrogen atoms when activated; and b) a non-polymerizable radiation-activatable crosslinking agent capable of abstracting hydrogen atoms when activated. WO-A1-96/35725 (ANG) discloses pigmented, UV-crosslinked, acrylic-based, pressure sensitive adhesives claimed to have high cohesive strength and high-temperature shear resistance. The adhesives disclosed in WO-A1-96/35725 comprise an acrylic copolymer compounded with a pigment and a hydrogen-abstracting photoinitiator, wherein the acrylic copolymer is obtained by copolymerizing an alkyl acrylate and a tertiary amine-containing monomer. WO-A1-2012/044529 (Satrijo et al.) describes a hot-melt processable PSA comprising: a) a hot-melt processable elastomeric (meth)acrylate random co-polymer; b) at least one tackifing resin comprising greater than 50 parts by weight per 100 parts by weight of elastomeric (meth)acrylate random co-polymer; and c) a thermoplastic material.

EP-A-2 733 186 refers to a radiation crosslinkable pressure sensitive adhesive precursor comprising: a) an acrylate base polymer; b) a co-polymerized type (II) photocrosslinker, in a amount greater than 0.05 parts by weight per 100 parts by weight of acrylate base polymer; c) a co-polymerized hydrogen-donating monomer; and d) a tackifying resin, in an amount greater than 40 parts by weight per 100 parts by weight of acrylate base polymer.

The use of high levels of hydrocarbon tackifying resin can be desirable because it can increase the adhesion of the pressure sensitive adhesive, making it aggressively adhere to wide range of substrates, especially substrates having low surface energy, such as polyethylene and polypropylene. However, hydrocarbon tackifying resin, especially when used at levels needed to obtain such high tack, has previously been known to detrimentally affect the shear and cohesive strength of a pressure sensitive adhesive, and can raise the Tg of the adhesive. The use of high levels of hydrocarbon tackifying resin can be particularly detrimental to hot melt processable pressure sensitive adhesives.

As such, there is a need for a highly tackified radiation crosslinked pressure sensitive adhesive which overcomes the deficiencies previously mentioned, and which in particular provides high cohesive strength at elevated temperature and high-temperature shear resistance whilst ensuring excellent adhesion to various types of substrates.

Other advantages of the pressure sensitive adhesives, precursors of pressure sensitive adhesive and methods of the invention will be apparent from the following description.

### Summary

According to one aspect, the present disclosure relates to a radiation crosslinkable pressure adhesive precursor comprising:
a) an acrylate base polymer
b) a co-polymerized type (II) photocrosslinker, in a amount greater than 0.1 parts by weight per 100 parts by weight of acrylate base polymer;
c) a co-polymerized hydrogen-donating monomer; and
d) a hydrocarbon tackifying resin, in an amount greater than 40 parts by weight per 100 parts by weight of acrylate base polymer,
and wherein either the total acid content of a), b), and c) is zero or the total acid content of a), b), and c) is greater than zero and not more than 3%.

According to another aspect, the present disclosure relates to a method of preparing a radiation crosslinked pressure sensitive adhesive, comprising the steps of:
a) providing a radiation crosslinkable pressure sensitive adhesive precursor as above-described; and
b) radiation crosslinking the radiation crosslinkable pressure sensitive adhesive precursor.

In still another aspect, the present disclosure relates to the use of a radiation crosslinkable pressure sensitive adhesive precursor as above described, for the manufacture of an adhesive tape, such as single coated or double-sided tape, or labels.

### Detailed Description

In the present disclosure, singular forms such as "a," "an," and "the" are often used for convenience. However, it should be understood that the singular is meant to include the plural unless the singular alone is called for either explicitly or by context.

The present invention provides a highly tackified radiation crosslinked pressure sensitive adhesive which is, in particular, provided with high cohesive strength at elevated temperature whilst ensuring excellent adhesion to various types of substrates, in particular low surface energy (LSE) substrates, such as polyethylene and polypropylene. In particular, the present invention provides versatile highly tackified radiation crosslinkable PSA formulations, in particular solvcntlcss acrylate PSA formulations.

The disclosed precursors comprise an acrylate base polymer. A co-polymerized type (II) photocrosslinker is included at levels higher than 0.1, in particular greater than 0.15, more in particular greater than 0.3 parts by weight per 100 parts of the acrylate base polymer. The precursors also include a co-polymerized hydrogen donating monomer. When acidic monomers, such as those containing a carboxylic acid, sulphonic acid, phosphoric acid, or similar acid functional group are present, they are present such that the total acid content of the acrylate base polymer, the co-polymerized type (II) photocrosslinker, and the co-polymerized hydrogen donating monomer is no more than 3%, sometimes no more than 2% , no more than 1.5%, no more than 1.0% or no more than 0.5%; in some cases, the acid content of these three components is zero. The precursors also include a hydrocarbon tackifying resin in amounts greater than 40 parts per weight per 100 parts per weight of the acrylate base polymer. Unexpectedly, this particular combination of elements in the specified amounts and having the specified acid content is an precursor formulation that, after a suitable crosslinking step, provides highly tackified pressure sensitive adhesives having beneficial properties. Such beneficial properties can include, for example, one or more of good shear properties, particularly on low energy surfaces, and hot melt processability. Other beneficial properties can be present.

Accordingly a radiation crosslinkable pressure sensitive adhesive precursor can comprise:
a) an acrylate base polymer
b) a co-polymerized type (II) photocrosslinker, in an amount greater than 0.1 parts by weight per 100 parts by weight of acrylate base polymer;
c) a co-polymerized hydrogen-donating monomer; and
d) a hydrocarbon tackifying resin, in an amount greater than 40 parts by weight per 100 parts by weight of acrylate base polymer,
and wherein either the total acid content of a), b), and c) is zero or the total acid content of a), b), and c) is greater than zero and not more than 3%.

In some cases, the co-polymerized type (II) photocrosslinker is a component of the acrylate base polymer. In other cases, the co-polymerized type (II) photocrosslinker is co-polymerized with the co-polymerized hydrogen-donating monomer in a polymer that is distinct from the acrylate base polymer. In such cases, an additional acrylate polymer can also be co-polymerized with the co-polymerized hydrogen-donating monomer and the co-polymerized type (II) photocrosslinker. In still other cases, the co-polymerized type (II) photocrosslinker is copolymerized with both the acrylate base polymer and the co-polymerized hydrogen-donating monomer, such that the co-polymerized type (II) photocrosslinker is a component of both the acrylate base polymer and a distinct polymer that also includes the co-polymerized hydrogen-donating monomer. In such cases, an additional acrylate polymer can also be co-polymerized with the co-polymerized hydrogen-donating monomer and the co-polymerized type (II) photocrosslinker. A polymer other than the acrylate base polymer that contains the co-polymerized type (II) photocrosslinker is sometimes referred to as a crosslinking polymer.

The co-polymerized hydrogen-donating monomer can be co-polymerized with the acrylate base polymer. In other cases, the co-polymerized hydrogen-donating monomer is co-polymerized with the co-polymerized type (II) photocrosslinker is co-polymerized with the co-polymerized hydrogen-donating monomer in a polymer that is distinct from the acrylate base polymer. In such cases, an additional acrylate polymer can be co-polymerized with the co-polymerized hydrogen-donating monomer and the co-polymerized type (II) photocrosslinker. In other cases, the co-polymerized hydrogen-donating monomer is co-polymerized with both the acrylate base polymer and the co-polymerized type (II) photocrosslinker such that the polymerized hydrogen-donating monomer is a component of both the acrylate base polymer and a distinct polymer that also includes the co-polymerized hydrogen-donating monomer. In such cases, an additional acrylate polymer can also be co-polymerized with the co-polymerized hydrogen-donating monomer and the co-polymerized type (II) photocrosslinker. When a polymer other than the acrylate base polymer that contains both the co-polymerized type (II) photocrosslinker and co-polymerized type (II) photocrosslinker, that polymer can be the crosslinking polymer referenced above.

The tenn "adhesive" as used herein refers to polymeric compositions useful to adhere together two adherends. Examples of adhesives are pressure sensitive adhesives.

Pressure sensitive adhesive compositions are well known to those of ordinary skill in the art to possess properties including the following: (1) aggressive and permanent tack, (2) adherence with no more than finger pressure, (3) sufficient ability to hold onto an adherend, and (4) sufficient cohesive strength. Materials that have been found to function well as pressure sensitive adhesives are polymers designed and formulated to exhibit the requisite viscoelastic properties resulting in a desired balance of tack, peel adhesion, and shear holding power.

The term "acrylate" and "methacrylate" refers to monomers, oligomers or polymers that are derived from monomeric acrylic or methacrylic acids or their esters. Acrylate and methacrylate monomers, oligomers, or polymers are referred to collectively herein as "(meth)acrylates".

The term "acid content" refers to the total content of polymerized monomers bearing an acid moiety, such as a carboxylic acid, a sulphonic acid or phosphonic acid moiety. Unless otherwise noted, acid content is described herein as a weight percent. The "total acid content" of multiple items refers to the weight percent of polymerized monomers bearing an acid moiety, such as those described above, of all of the enumerated items.

The term "type (II) photocrosslinker" refers to a photocrosslinker, which upon irradiation, becomes excited to a higher energy state in which it can abstract a hydrogen atom from a hydrogen-donating molecule, typically in a process such as a Norrish type II reaction, thereby generating on the hydrogen-donating molecule a free radical capable of further reaction, such as e.g. free radical addition polymerization, free radical addition crosslinking. The expression "co-polymerized type (II) photocrosslinker" refers to a type (II) photocrosslinker that is present as a co-monomer in at least one co-polymer. The at least one co-polymer can be an acrylate base polymer, a crosslinking polymer, or both.

A "hydrogen-donating monomer" refers to a monomer containing at least one hydrogen atom that is abstractable by an excited state type (II) photocrosslinker. The expression "co-polymerized hydrogen-donating monomer" refers to a hydrogen-donating monomer that is present as a co-monomer in at least one co-polymer. The at least one co-polymer can be an acrylate base polymer, a crosslinking polymer, or both.

"Alkyl" refers to a monovalent group that is a radical of an alkane, which is an aliphatic hydrocarbon. The alkyl can be linear, branched, cyclic, or combinations thereof and typically has 1 to 24 carbon atoms. In some embodiments, the alkyl group contains 1 to 18, 1 to 12, 1 to 10, 1 to 8, 1 to 6, or 1 to 4 carbon atoms.

The radiation crosslinkable pressure sensitive adhesive precursor can include an acrylate base polymer. Any suitable acrylate base polymer can be used.

Preferably, the acrylate base polymer contains a polymerized form of at least one linear or branched alkyl (meth)acrylate monomer, wherein the linear or branched alkyl group of the alkyl (meth)acrylate monomer preferably comprises from 1 to 24, more preferably from 4 to 20, even more preferably 6 to 18, still more preferably from 8 to 12 carbon atoms. The acrylate base polymer can be prepared by polymerizing a mixture of the above-mentioned monomers by any suitable method; suitable methods are known in the art. The mixture has an acid content of no more than 3%, in order to provide an acrylate base polymer with an acid content of no more than 3%. Typically, the acid content is no more than 2%, no more than 1.5%, no more than 1%, or no more than 0.5%. In one particular aspect, the acrylate base polymer for use in the present invention is free of acrylic acid, methacrylic acid, and any other monomers bearing an acid moiety.

In a preferred aspect, at least one linear or branched alkyl (meth)acrylate monomer is selected from the group consisting of methyl acrylate, ethyl acrylate, propyl acrylate, such as n-propyl acrylate and isopropyl acrylate, butyl acrylate, such as n-butyl acrylate and isobutyl acrylate, pentyl acrylate, such as n-pentyl and iso-pentyl acrylate, hexyl acrylate, such as n-hexyl acrylate and iso-hexyl acrylate, octyl acrylate, such as iso-octyl acrylate and 2-ethylhexyl acrylate, nonyl acrylate, decyl acrylate, such as 2-propylheptyl acrylate, dodecyl acrylate, lauryl acrylate, octadecyl acrylate, such as C18 acrylate derived from Guerbet alcohols, which can be 2-heptyl undecanyl acrylate, and any combinations or mixtures thereof.

More preferably, the at least one alkyl (meth)acrylate monomer for use herein is selected from the group consisting of iso-octyl acrylate, 2-ethylhexyl acrylate, decyl acrylate such as 2-propylheptyl acrylate, octadecyl acrylate, such as stearyl acrylate and C18 acrylate derived from Guerbet alcohols, such as 2-heptyl undccanyl acrylate, and any combinations or mixtures thereof. Still more preferably, the alkyl (meth)acrylate monomer for use herein comprises iso-octyl acrylate.

Typically, the acrylate base polymer for use in the present invention is prepared from a monomer mixture comprising from 50 to 100 parts, from 70 to 100 parts, from 80 to 100 parts, or even from 90 to 100 parts by weight of at least one linear or branched alkyl (meth)acrylate monomer, wherein the linear or branched alkyl group of the alkyl (meth)acrylate monomer preferably comprises from 1 to 24, more preferably from 4 to 20, even more preferably 6 to 18, still more preferably from 8 to 12 carbon atoms.

Optionally, one or more of acrylic acid, methacrylic acid or any other monomers bearing an acid moiety can be included in the acrylate base polymer as well, however, the combined weight of the acrylic acid, methacrylic acid, and any other monomers bearing an acid moiety is no more than 3% by weight, such as no more than 2%, no more than 1.5%, no more than 1%, or no more than 0.5%, based on the total weight of the acrylate base polymer. In one particular embodiment the acrylate base polymer is free of monomers bearing an acid moiety.

Optionally, one or more monoethylenically unsaturated co-monomers may be present in the (pre-polymerization) monomer mixture used to prepare the acrylate base polymer, in an amount of from 0.5 to 50 parts co-monomer, and are thus typically polymerized with the acrylate monomers. Examples of suitable co-monomers include cyclohexyl (meth)acrylate, (meth)acrylonitrile, vinyl acetate, isobornyl (meth)acrylate, hydroxyalkyl (meth)acrylates, (meth)acrylamide, vinyl esters of neodecanoic, neononanoic, neopentanoic, 2-ethylhexanoic, or propionic acids (e.g., available from Union Carbide Corp. of Danbury, Conn. under the designation "Vynates"), vinylidene chloride, alkyl vinyl ethers, ethoxyethoxy ethyl acrylate and methoxypolyethylene glycol 400 acrylate (available from Shin Nakamura Chemical Co., Ltd. under the designation "NK Ester AM-90G") and any combinations or mixtures thereof.

When present, the monoethylenically unsaturated co-monomer is typically used in amounts ranging from 0.5 to 25, from 1.0 to 15, from 1.0 to 8.0, from 2.0 to 6.0, or even from 3.0 to 5.0 parts, by weight per 100 parts by weight of acrylate base polymer.

Preferably, the acrylate base polymer comprises a co-polymer containing at least one (meth)acrylate monomer, even more preferably an alkyl (meth)acrylate monomer. Thus, the pre-polymerization mixture used to prepare the acrylate base polymer also preferably contains at least one (meth)acrylate monomer, even more preferably an alkyl (meth)acrylate monomer.

Preferably, the acrylate base polymer comprises a co-polymer of iso-octyl acrylate, 2-ethylhexyl acrylate, 2-propyl heptyl acrylate or linear or branched octadecyl acrylate. The acrylate base polymer optionally comprises acrylic acid. In this case, the acrylic acid is present in no more than 3% by weight, such as no more than 2%, no more than 1.5%, no more than 1%, or no more than 0.5%, based on the total weight of the acrylate base polymer.

In some other preferred aspects, the acrylate base polymer (or the pre-polymerization monomer mixture used to prepare the acrylate base polymer) further comprises a photocrosslinker, preferably a co-polymerized type (II) photocrosslinker.

Additionally, one or more multifunctional ethylenically unsaturated monomers may be included in the pre-polymerization monomer mixture used to prepare the acrylate base polymer, typically in low concentration. Examples of such multifunctional ethylenically unsaturated monomers include, for example, multifunctional (meth)acrylate monomers. Multifunctional (meth)acrylates include tri(meth)acrylates and di(meth)acrylates (that is, compounds comprising three or two (meth)acrylate groups). Typically di(meth)acrylate monomers (that is, compounds comprising two (meth)acrylate groups) are used. Useful tri(meth)acrylates include, for example, trimethylolpropane tri(meth)acrylate, propoxylated trimethylolpropane triacrylates, ethoxylated trimethylolpropane triacrylates, tris(2-hydroxy ethyl)isocyanurate triacrylate, and pentaerythritol triacrylate. Useful di(meth)acrylates include, for example, ethylene glycol di(meth)acrylate, diethylene glycol di(meth)acrylate, triethylene glycol di(meth)acrylate, tetraethylene glycol di(meth)acrylate, 1,4-butanediol di(meth)acrylate, 1,6-hexanediol di(meth)acrylate, alkoxylated 1,6-hexanediol diacrylate, tripropylene glycol diacrylate, dipropylene glycol diacrylate, cyclohexane dimethanol di(meth)acrylate, alkoxylated cyclohexane dimethanol diacrylates, ethoxylated bisphenol A di(meth)acrylates, neopentyl glycol diacrylate, polyethylene glycol di(meth)acrylates, polypropylene glycol di(meth)acrylates, and urethane di(meth)acrylates. The branching agent 1,6-hexanediol diacrylate (HDDA) is particularly suitable. Typically the di(meth)acrylate branching agent is used in amounts ranging from 0 to 0.05 parts by weight per 100 parts by weight of acrylate base polymer. When one or more of the multifunctional ethylenically unsaturated monomers contains an acid moiety, the combined weight of the one or more multifunctional ethylenically unsaturated monomers containing an acid moiety, the acrylic acid monomers, and the methacrylic acid monomers is no more than 3% by weight, such as no more than 2%, no more than 1.5%, no more than 1%, or no more than 0.5%, based on the total weight of the acrylate base polymer.

Generally, the pre-polymerization monomer mixture used to prepare the acrylate base polymer, includes an appropriate initiator. For polymerization by ultraviolet light, a photoinitiator is included. Useful photoinitiators include substituted acetophenones such as benzyl dimethyl ketal and 1-hydroxycyclohexyl phenyl ketone, substituted alpha-ketols such as 2-methyl-2-hydroxypropiophenone, benzoin ethers such as benzoin methyl ether, benzoin isopropyl ether, substituted benzoin ethers such as anisoin methyl ether, aromatic sulfonyl chlorides, photoactive oximes and azo-type initiators. The photoinitiator may be used in an amount from about 0.001 to about 5.0 parts by weight, preferably from about 0.01 to about 3.0 parts by weight, more preferably in an amount from 0.05 to 0.5 parts by weight, and more preferably in an amount from 0.05 to 0.3 parts by weight per 100 parts by weight of total monomer.

The pre-polymcrization monomer mixture used to prepare the acrylate base polymer, may also be polymerized by thermal polymerization or by a combination of thermal and radiation polymerization. For thermal polymerization, a thermal initiator is included. Thermal initiators useful in the present invention include, but are not limited to azo, peroxide, persulfate, and redox initiators. Azo-type initiators, such as e.g. the "Vazo" line, commercially available from DuPont Chemical Co, are particularly preferred. The thermal initiator may be used in an amount from about 0.01 to about 5.0 parts by weight per 100 parts by weight of total monomer, preferably from 0.025 to 2 weight percent.

The radiation crosslinkable pressure sensitive adhesive precursor according to a first aspect of the present invention, further comprises a co-polymerized type (II) photocrosslinker. Suitable co-polymerized type (II) photocrosslinkers for use herein will be easily identified by those skilled in the art, in the light of the present description.

In some exemplary aspects, the co-polymerized type (II) photocrosslinkers for use in the present invention are selected from the group consisting of mono-and multi-ethylenically unsaturated aromatic ketone co-monomers free of ortho-aromatic hydroxyl groups such as those disclosed in U.S. Pat. No. 4,737,559 (Kellen et al.). Specific examples of mono-ethylenically unsaturated aromatic ketone comonomers include the copolymerizable photosensitive crosslinkers para-acryloxybenzophenone (ABP), para-acryloxyethoxybenzophenone (AEBP), para-N-(methylacryloxyethyl)-carbamoylethoxybenzophenone, 4-acryloyloxydiethoxy-4-chlorobenzophenone, para-acryloxyacetophenone, ortho-acrylamidoacetophenone, acrylated anthraquinones, and any combinations or mixtures thereof.

In a preferred aspect, the co-polymerized type (II) photocrosslinker for use in the present invention is selected from the group consisting of para-acryloxybenzophenone (ABP), para-acryloxyethoxybenzophenone (AEBP), and any combinations or mixtures thereof.

The co-polymerized type (II) photocrosslinkers may typically be used in an amount from 0.10 to 1 parts, from 0.11 to 1 parts, from 0.16 to 1 parts, from 0.18 to 0.70 parts, or even from 0.20 to 0.50 parts by weight per 100 parts by weight of acrylate base polymer (or of pre-polymerization monomer mixture used to prepare the acrylate base polymer).

In some cases, the co-polymerized type (II) photocrosslinker canbe presentas a co-monomer in the acrylate base polymer. In such cases, it is co-polymerized together with the other monomers in the pre-polymerization monomer mixture used to prepare the acrylate base polymer.

In other cases, the co-polymerized type (II) photocrosslinker can be present as a co-monomer in a crosslinking polymer, preferably an acrylate crosslinking polymer. Such crosslinking polymer is a distinct polymer from the acrylate base polymer.

In still other cases, the co-polymerized type (II) photocrosslinker can be present as a co-monomer in a crosslinking polymer and can also be present as a co-monomer in the acrylate base polymer.

The precursor composition further comprises one or more co-polymerized hydrogen-donating monomers. Any suitable co-polymerized hydrogen-donating monomers can be used.

Exemplary co-polymerized hydrogen-donating monomers include, but are not limited to, monomers comprising at least one abstractable hydrogen atom typically located on a carbon atom in a position alpha to a nitrogen or an oxygen atom, or carried by terminal or pendant mercapto groups potentially protected during polymerization.

Preferably, the co-polymerized hydrogen-donating monomer is selected from the group of monomers comprising carbon atoms, nitrogen atoms, and hydrogen atoms, wherein at least one hydrogen atom is covalently bound to a carbon atom that is a α-position to a nitrogen atom.

The co-polymerized hydrogen-donating monomer is often selected from the group consisting of (meth)acrylamide, (meth)acrylate, urethane (meth)acrylate, and vinylic monomers containing at least one nitrogen functional group, preferably a tertiary amine functional group, and any combinations or mixtures thereof.

Preferable examples of the co-polymerized hydrogen-donating monomer include N,N-dimethyl (meth)acrylamide; N,N-diethyl (meth)acrylamide; N-vinyl caprolactam; N-vinylpyrrolidone; N-isopropyl (meth)acrylamide; N,N-dimethylaminoethyl (meth)acrylate; 2-[(butylamino)carbonyl]oxy]ethyl (meth)acrylate N,N-dimethylaminopropyl (meth)acrylamide; N,N-diethylaminopropyl (meth)acrylamide; N,N-diethylaminoethyl (meth)acrylate; N,N-dimethylaminopropyl (meth)acrylate; N,N-diethylaminopropyl (meth)acrylate; N,N-dimethylaminoethyl (meth)acrylamide; N,N-diethylaminoethyl (meth)acrylamide; (meth)acryloyl morpholine, vinyl acetamide and any combinations or mixtures thereof. More preferably still, the co-polymerized hydrogen-donating monomer is selected from the group consisting of N,N-dimethyl acrylamide; N,N-dimethylaminoethyl (meth)acrylate; N,N-diethylaminoethyl (meth)acrylate and any combinations or mixtures thereof.

The co-polymerized hydrogen-donating monomer is typically used in an amount from 0.05 to 10 parts, from 0.05 to 5 parts, from 0.10 to 3 parts, or even from 0.15 to 2 parts by weight per 100 parts by weight of acrylate base polymer.

In some cases, the co-polymerized hydrogen-donating monomer is present as a co-monomer in the acrylate base polymer.

In other cases the co-polymerized hydrogen-donating monomer is present as a co-monomer in a polymer that is distinct from the acrylate base polymer, such as a crosslinking polymer, preferably an acrylate crosslinking polymer.

In still other cases, the co-polymerized hydrogen-donating monomer is present both as a co-monomer in the acrylate base polymer and as a co-monomer in a polymer that is distinct from the acrylate base polymer, such as a crosslinking polymer, preferably an acrylate crosslinking polymer.

The composition further comprises one or more hydrocarbon tackifying resins. Any suitable hydrocarbon tackifying resin can be used.

The one or more hydrocarbon tackifying are present at levels that provide, upon crosslinking of the precursor, a tackified pressure sensitive adhesive. Typical levels are greater than 40 parts by weight, greater than 50 parts by weight, greater than 60 parts by weight, greater than 70 parts by weight, or greater than 80 parts by weight of the hydrocarbon tackifying resin per 100 parts by weight of acrylate base polymer. Typical levels are no more than 150 parts by weight, no more than 125 parts by weight, no more than 110 parts by weight, or no more than 100 parts by weight of the the hydrocarbon tackifying resin per 100 parts by weight of acrylate base polymer.

In some particular aspects, the amount of hydrocarbon tackifying resin present in the radiation crosslinkable pressure sensitive adhesive precursor is greater than 45 parts, 50 or greater than 50 parts, 60 or greater than 60 parts or even 80 or greater than 80 or even 100 or greather than 100 parts by weight per 100 parts by weight of acrylate base polymer. In some other aspects, the radiation crosslinkable pressure sensitive adhesive precursor comprises from 40 to 150 parts, from 60 to 125 parts, from 75 to 125 parts, or even from 80 to 100 parts by weight of hydrocarbon tackifying resin per 100 parts by weight of acrylate base polymer.

Suitable hydrocarbon tackifying resins include those selected from the group consisting of terpenes, aliphatic C5 hydrocarbons, aromatic C9 hydrocarbons, their (partially) hydrogenated versions and any combinations thereof. Useful commercially available hydrocarbon tackifying resins include those available under the trade designations ESCOREZ 1102, ESCOREZ 1310, ESCOREZ 2173 and ESCOREZ 2203 (aliphatic/aromatic hydrocarbon resins) commercially available from ExxonMobil Corp., Houston, TX; and those available under the trade designations REGALITE 7100 and REGALITE 9100 (partially hydrogenated hydrocarbon resins) commercially available from Eastman, Kingsport, Tennessee.

Unexpectedly, these high amounts of hydrocarbon tackifying resin, when used in conjunction with the other elements described herein, form a precursor that, upon crosslinking, provides aggressive tack without any of the disadvantages of such resins.

Preferably, the hydrocarbon tackifying resin is selected from the group consisting of terpenes, aliphatic C5 hydrocarbons, aromatic C9 hydrocarbons, their (partially) hydrogenated versions and any combinations

In some cases, the radiation precursor comprises a crosslinking polymer.

Suitable compositions for forming a crosslinking polymer for use herein will be easily identified by those skilled in the art, in the light of the present disclosure. Exemplary compositions useful for preparing a crosslinking polymer for use herein include, but are not limited to, those comprising a monomer mixture comprising monomers selected from the group consisting of acrylic monomers, methacrylic monomers, vinyl ester monomers, and any combinations or mixtures thereof.

Accordingly, crosslinking polymers for use herein may be (meth)acrylate, vinyl ester, and any combinations or mixtures thereof.

In a preferred aspect, the crosslinking polymer is an acrylate crosslinking polymer. Acrylate monomers useful for forming the acrylate crosslinking polymer for use herein may be identical or distinct from the compositions used for forming the acrylate base polymer, as described herein above.

In a preferred aspect, the acrylate crosslinking polymer for use in the present invention, is prepared from a monomer mixture comprising at least one linear or branched alkyl (meth)acrylate monomer, wherein the linear or branched alkyl group of the alkyl (meth)acrylate monomer preferably comprises from 1 to 24, more preferably from 4 to 20, even more preferably 6 to 18, still more preferably from 8 to 12 carbon atoms.

In a preferred aspect, at least one linear or branched alkyl (meth)acrylate monomer is selected from the group consisting of methyl acrylate, ethyl acrylate, propyl acrylate, such as n-propyl acrylate and isopropyl acrylate, butyl acrylate, such as n-butyl acrylate and isobutyl acrylate, pentyl acrylate, such as n-pentyl and iso-pentyl acrylate, hexyl acrylate, such as n-hexyl acrylate and iso-hexyl acrylate, octyl acrylate, such as iso-octyl acrylate and 2-ethylhexyl acrylate, nonyl acrylate, decyl acrylate, such as 2-propylheptyl acrylate, dodecyl acrylate, lauryl acrylate, octadecyl acrylate, such as stearyl acrylate and C18 acrylate derived from Guerbet alcohols and any combinations or mixtures thereof More preferably, the alkyl (meth)acrylate monomer for use herein is selected from the group consisting of iso-octyl acrylate, 2-ethylhexyl acrylate, and any combinations or mixtures thereof. Still more preferably, the alkyl (meth)acrylate monomer for use herein comprises (or consists of) iso-octyl acrylate.

In many cases, one or more of the co-polymerized type (II) photocrosslinkers and the co-polymerized hydrogen donating monomer are present as co-monomers in the crosslinking polymer.

Suitable co-polymerized type (II) photocrosslinkers for use herein are as defined above with respect to the acrylate base polymer.

Preferably, the co-polymerized type (II) photocrosslinker is selected from the group consisting of para-acryloxybenzophenone (ABP), para-acryloxyethoxybenzophenone (AEBP), and any combinations or mixtures thereof.

Suitable co-polymerized hydrogen-donating monomer for use herein are as defined above for the acrylate base polymer and include monomers selected from the group consisting of N,N-dimethyl (meth)acrylamide; N,N-diethyl (meth)acrylamide; N-vinyl caprolactam; N-vinylpyrrolidone; N-isopropyl (meth)acrylamide; N,N-dimethylaminoethyl (meth)acrylate; 2-[[(butylamino)carbonyl]oxy]ethyl (meth) acrylate N,N-dimethylaminopropyl (meth)acrylamide; N,N-diethylaminopropyl (meth)acrylamide; N,N-diethylaminoethyl (meth)acrylate; N,N-dimethylaminopropyl (meth)acrylate; N,N-diethylaminopropyl (meth)acrylate; N,N-dimethylaminoethyl (meth)acrylamide; N,N-diethylaminoethyl (meth)acrylamide; (meth)acryloyl morpholine, vinylacetamide and any combinations or mixtures thereof. Preferably still, the co-polymerized hydrogen-donating monomer for use herein is selected from the group consisting of N,N-dimethyl acrylamide; N,N-dimethylaminoethyl (meth)acrylate; N,N-diethylaminoethyl (meth)acrylate, N,N-dimethylaminopropyl (meth)acrylate, and any combinations or mixtures thereof.

The precursor composition can comprise from 0.5 to 30 parts, from 0.5 to 20 parts, from 1.0 to 10 parts, or even from 2.0 to 8.0 parts by weight per 100 parts by weight of acrylate base polymer, of the crosslinking polymer, preferably the acrylate crosslinking polymer.

The pre-polymerization monomer mixture used to prepare the crosslinking polymer often includes an appropriate initiator. Alternatively, an initiator can be added to the pre-polymerization mixture just before the crosslinking takes place.

For thermal polymerization, a thermal initiator is included. Thermal initiators useful in the present invention include, but are not limited to azo, peroxide, persulfate, and redox initiators. Azo-type initiators, such as e.g. the "Vazo" line, commercially available from DuPont Chemical Co, are particularly preferred. The thermal initiator may be used in an amount from about 0.01 to about 5.0 parts by weight per 100 parts by weight of total monomer, preferably from 0.025 to 2 weight percent.

For polymerization by ultraviolet light, a photoinitiator is included. Useful photoinitiators include those described herein above for use in the acrylate base polymer. The photoinitiator may be used in an amount from about 0.001 to about 5.0 parts by weight per 100 parts of total monomer, from about 0.01 to about 5.0 parts by weight per 100 parts by weight of total monomer, or even from 0.1 to 0.5 parts by weight per 100 parts by weight of total monomer.

The radiation crosslinkable pressure sensitive adhesive precursor mixture can further include, as an optional ingredient, a chain transfer agent to control the molecular weight of the polymer. Advantageously, the chain transfer agent is comprised in the (pre-polymerization) monomer mixture used to prepare the acrylate base polymer and/or the crosslinking polymer. Chain transfer agents are materials which regulate free radical polymerization and are generally known in the art. Suitable chain transfer agents include halogenated hydrocarbons such as carbon tetrabromide; sulfur compounds such as lauryl mercaptan, butyl mercaptan, ethanethiol, isooctylthioglycolate (IOTG), 2-ethylhexyl thioglycolate, 2-ethylhexyl mercaptopropionate, pentaerythritol terakis(3-mercaptopropionate), 2-mercaptoimidazole, and 2-mercaptoethyl ether; and solvents such as ethanol and isopropanol.

As will be apparent to those skilled in the art, the radiation crosslinkable pressure sensitive adhesive precursor mixture according to the invention may further include a variety of additional additives depending on the envisaged properties for the resulting crosslinked pressure sensitive adhesive. Exemplary additional additives include, but are not limited to, one or more plasticizers, UV stabilizers, antistatic agents, colorants, antioxidants, fungicides, bactericides, organic and/or inorganic filler particles, pigments, and any combinations thereof. Advantageously, the additional additives for use herein are non-polymerizable additives. As will be apparent to those skilled in the art, additional additives for use herein may be included at appropriate timing and in the appropriate polymeric or pre-polymeric matrix.

In an advantageous aspect of the radiation crosslinkable pressure sensitive adhesive precursor, the amount of acrylate base polymer, co-polymerized type (II) photocrosslinker, co-polymerized hydrogen-donating monomer and hydrocarbon tackifier are selected such as to provide the radiation crosslinked pressure sensitive adhesive obtained by radiation crosslinking, preferably UV radiation crosslinking, the radiation crosslinkable pressure sensitive adhesive precursor, with a static shear at 70°C of at least 2000 minutes, preferably at least 4000 minutes, more preferably at least 6000 minutes, even more preferably at least 8000 minutes, still more preferably at least 10000 minutes, when measured according to static shear test ASTM D3654.

In an advantageous aspect, the static shear at 70°C is measured on a UV crosslinked pressure sensitive adhesive layer coated on a liner and applied onto a substrate, wherein the thickness of the pressure sensitive adhesive layer is varied between about 25 µm and about 100 µm, and wherein the UV crosslinking is typically operated with 150-1200 mJ/cm² of total UV (sum of UV-A, UV-B and UV-C; measured with a Power Puck from EIT inc.) 800 mJ/cm² UV from a medium pressure UV lamp, corresponding to 250 mJ/cm² UV-B light and 50 mJ/cm² UV-C.

According to one preferred aspect of the invention, the radiation crosslinkable pressure sensitive adhesive precursor comprises:
a) an acrylate base polymer;
b) from 0.1 to 1 parts, from 0.11 to 1 parts, from 0.16 to 1 parts, from 0.18 to 0.70 parts, or even from 0.20 to 0.50 parts by weight per 100 parts by weight of acrylate base polymer, of a co-polymerized type (II) photocrosslinker;
c) from 0.05 to 30 parts, from 0.05 to 10 parts, from 0.05 to 5 parts, from 0.10 to 3 parts, or even from 0.15 to 2 parts by weight per 100 parts by weight of acrylate base polymer, of
d) a co-polymerized hydrogen-donating monomer; and
   from 40 to 150 parts, from 45 to 125 parts, or even from 60 to 100 parts by weight per 100 parts by weight of acrylate base polymer, of a hydrocarbon tackifying resin and
wherein either the total acid content of a), b), and c) is zero or the total acid content of a), b), and c) is greater than zero and not more than 3%.

Advantageously, the radiation crosslinkable pressure sensitive adhesive precursor is hot melt processable. However, the invention is not limited to such radiation crosslinkable pressure sensitive adhesive precursors since, according to another advantageous aspect, the radiation crosslinkable pressure sensitive adhesive precursor may be provided as a solvent borne adhesive system, which is therefore solvent processable, or as a water based system.

Hot melt processable radiation crosslinkable pressure sensitive adhesive precursors are typically hot melt mixed blends comprising an acrylate base polymer, a co-polymerized type (II) photocrosslinker, in a amount greater than 0.10 parts by weight per 100 parts by weight of acrylate base polymer, a co-polymerized hydrogen-donating monomer, and a tackifying resin, in an amount greater than 40 parts by weight per 100 parts by weight of acrylate base polymer. Typically, the hot melt processable radiation crosslinkable pressure sensitive adhesive precursor may further comprise a thermoplastic material.

The hot melt processable radiation crosslinkable pressure sensitive adhesive precursors can be prepared by a variety of hot melt techniques. Generally, the methods comprise providing a hot melt mixing apparatus, providing an acrylate base polymer, a co-polymerized type (II) photocrosslinker in an amount greater than 0.10 parts by weight per 100 parts by weight of acrylate base polymer, a co-polymerized hydrogen-donating monomer, and providing greater than 40 parts by weight per 100 parts by weight of acrylate base polymer of a tackifying resin in an amount, mixing the acrylate base polymer, the co-polymerized type (II) photocrosslinker, the co-polymerized hydrogen-donating monomer and the tackifying resin in the hot melt mixing apparatus to prepare a hot melt blend, removing the blend from the hot melt mixing apparatus to form a hot melt processable pressure sensitive adhesive.

As described below, a variety of additional additives can be included in the hot melt blend including one or more plasticizers, crosslinkers, UV stabilizers, antistatic agents, colorants, antioxidants, fungicides, bactericides, organic and/or inorganic filler particles, and the like. Optionally, low levels of plasticizer (e.g., less than about 10 parts by weight) may be added to the hot melt blend. A wide variety of commercially available materials described as "plasticizers" are suitable, as long as the added plasticizer is compatible with the other components of the hot melt blend. Representative plasticizers include dialkyl adipate, di(2-ethylhexyl) adipate, dibutoxyethoxyethyl formal, and dibutoxyethoxyethyl adipate.

A variety of hot melt mixing techniques using a variety of hot melt mixing equipment are suitable for preparing the hot melt processable pressure sensitive adhesive precursors and hot melt processable pressure sensitive adhesives. Both batch and continuous mixing equipment may be used. Examples of batch methods include those using a BRABENDER (e. g. a BRABENDER PREP CENTER, commercially available from C.W. Brabender Instruments, Inc.; South Hackensack, NJ) or BANBURY internal mixing and roll milling equipment (e.g. equipment available from Farrel Co.; Ansonia, CN). Examples of continuous methods include single screw extruding, twin screw extruding, disk extruding, reciprocating single screw extruding, pin barrel single screw extruding, planetary extruding, and ring extruding. Continuous methods can utilize distributive elements, pin mixing elements, static mixing elements, and dispersive elements such as MADDOCK mixing elements and SAXTON mixing elements. A single hot melt mixing apparatus may be used, or a combination of hot melt mixing equipment may be used to prepare the hot melt blends and the hot melt processable pressure sensitive adhesives. In some embodiments, it may be desirable to use more than one piece of hot melt mixing equipment. For example, one extruder, such as, for example, a single screw extruder, can be used to hot melt process the hot melt processable elastomeric (meth)acrylate random copolymer contained within a thermoplastic pouch. The output of this extruder can be fed into a second extruder, for example, a twin screw extruder for hot melt mixing with the additional components. The hot melt blends described above are used to form hot melt processable pressure sensitive adhesives upon completion of the hot melt blending process.

The output of the hot melt mixing is coated onto a substrate to form an adhesive layer. If a batch apparatus is used, the hot melt blend can be removed from the apparatus and placed in a hot melt coater or extruder and coated onto a substrate. If an extruder is used to prepare the hot melt blend, the blend can be directly extruded onto a substrate to form an adhesive layer in a continuous forming method. In the continuous forming method, the adhesive can be drawn out of a film die and subsequently contacted to a moving plastic web or other suitable substrate. If the adhesive is to be part of a tape, the substrate may be a tape backing. In some methods, the tape backing material is coextruded with the adhesive from a film die and the multilayer construction is then cooled to form the tape in a single coating step. If the adhesive is to be a transfer tape, the adhesive layer may be a free standing film and the substrate may be a release liner or other releasing substrate. After forming, the adhesive layer or film can be solidified by quenching using both direct methods (e.g. chill rolls or water batch) and indirect methods (e.g. air or gas impingement).

In alternative aspects of the invention however, the radiation crosslinkable pressure sensitive adhesive precursor may be coated using any other conventional technique well-known in the art, such as e.g. solution coating, coextrusion coating, solventless coating, waterbome coating, and any combinations thereof.

The resulting radiation crosslinkable pressure sensitive adhesive precursor layer is then subjected to a crosslinking step by being exposed to suitable radiation, in particular to high intensity UV radiation, to effect crosslinking. Typically, the crosslinking step is performed by exposure to high intensity ultraviolet (UV) radiation using commonly known UV lamps with an emission spectra between 250 to 400 nanometers (nm), and with an intensity between about 0.1 to about 1000 mW/cm².

According to another aspect, the present invention relates to a method of preparing a radiation crosslinked pressure sensitive adhesive, comprising the steps of:
a) providing a radiation crosslinkable pressure sensitive adhesive precursor as above-described; and
b) radiation crosslinking the radiation crosslinkable pressure sensitive adhesive precursor.

The radiation crosslinkable pressure sensitive adhesive precursor according to the invention may be obtained using techniques commonly known to those skilled in the art of formulating pressure sensitive adhesive formulations. The polymeric precursor may be obtained in a conventional manner, using e.g. solution, bulk, or emulsion polymerization techniques. The acrylate base polymer may advantageously be obtained using bulk or solution polymerization using thermal or UV techniques. The crosslinking polymer may advantageously be obtained using solution polymerization, followed by stripping of the solvent thereby forming a polymer melt.

Depending on whether the type (II) photocrosslinker and/or the hydrogen-donating monomer are co-polymerized with the acrylate base polymer and/or with the crosslinking polymer, the various pre-polymerizations formulations and the corresponding monomer mixtures will be easily apparent to those skilled in the art in the light of the present description.

Typically, the polymerization steps for the acrylate base polymer are effected by exposure to ultraviolet (UV) radiation as described in U.S. Pat. No. 4,181,752 (Martens et al.). In some executions, the polymerization is carried out with UV black lights having over 60 percent, or over 75 percent of their emission spectra between 280 to 400 nanometers (nm), with an intensity between about 0.1 to about 25 mW/cm2.

The weight average molecular weight of the polymer (i.e. the acrylate base polymer and/or the crosslinking polymer) having a co-polymerized type (II) photocrosslinker may advantageously range from about 50,000 to about 3,000,000, or from about 100,000 to about 1,800,000, and more typically from about 200,000 to about 1,500,000.

In one advantageous aspect, the method of preparing a radiation crosslinked pressure sensitive adhesive, comprises the steps of:
a) providing a radiation crosslinkable pressure sensitive adhesive precursor as above-described; and
b) radiation crosslinking the radiation crosslinkable pressure sensitive adhesive precursor.

According to one exemplary aspect, the method of preparing a radiation crosslinked pressure sensitive adhesive comprises the steps of:
a) providing an acrylate base;
b) providing a co-polymerized type (II) photocrosslinker, in an amount greater than 0.10 parts, greater than 0.15 parts, or even greater than 0.30 parts by weight per 100 parts by weight of acrylate base polymer;
c) providing a co-polymerized hydrogen-donating monomer;
d) providing a hydrocarbon tackifying resin, in an amount greater than 40 parts by weight per 100 parts by weight of acrylate base polymer;
e) mixing the acrylate base polymer, co-polymerized type (II) photocrosslinker, the co-polymerized hydrogen-donating monomer and the tackifying resin thereby forming a radiation crosslinkable pressure sensitive adhesive precursor; and
f) radiation crosslinking, preferably UV radiation crosslinking, the radiation crosslinkable pressure sensitive adhesive precursor thereby forming a radiation crosslinked pressure sensitive adhesive,
and wherein either the total acid content of a), b), and c) is zero or the total acid content of a), b), and c) is greater than zero and not more than 3%.

In one particular aspect of the method of preparing a radiation crosslinked pressure sensitive adhesive, the co-polymerized type (II) photocrosslinker and/or the co-polymerized hydrogen-donating monomer arc co-polymcrized with the acrylate base polymer and/or with a crosslinking polymer, preferably an acrylate crosslinking polymer, distinct from the acrylate base polymer.

In another particular aspect of the method of preparing a radiation crosslinked pressure sensitive adhesive, the co-polymerized type (II) photocrosslinker and/or the co-polymerized hydrogen-donating monomer are co-polymerized with the acrylate base polymer.

In still another particular aspect of the method of preparing a radiation crosslinked pressure sensitive adhesive, the co-polymerized type (II) photocrosslinker and/or the co-polymerized hydrogen-donating monomer are co-polymerized with the crosslinking polymer, preferably the acrylate crosslinking polymer.

In a preferred execution of the method of preparing a radiation crosslinked pressure sensitive adhesive, the amount of acrylate base polymer, co-polymerized type (II) photocrosslinker, co-polymerized hydrogen-donating monomer and hydrocarbon tackifier are selected such as to provide the radiation crosslinked pressure sensitive adhesive obtained by radiation crosslinking, preferably UV radiation crosslinking, the radiation crosslinkable pressure sensitive adhesive precursor, with a static shear at 70°C of at least 2000 minutes, preferably at least 4000 minutes, more preferably at least 6000 minutes, even more preferably at least 8000 minutes, still more preferably at least 10000 minutes, when measured according to static shear test ASTM D3654.

In an advantageous aspect of the method of preparing a radiation crosslinked pressure sensitive adhesive, the static shear at 70°C is measured on a UV crosslinked pressure sensitive adhesive layer coated on a substrate, wherein the thickness of the pressure sensitive adhesive layer is typically between about 25µm to about 100 µm, and wherein the UV crosslinking is typically operated with 150-1200 mJ/cm² of total UV (sum of UV-A, UV-B and UV-C; measured with a Power Puck from EIT inc.). Advantageously, the method of preparing a radiation crosslinked pressure sensitive adhesive comprises the step of melt mixing the acrylate base polymer, the co-polymerized type (II) photocrosslinker, the co-polymerized hydrogen-donating monomer and the tackifying resin thereby forming a hot melt processable radiation crosslinkable pressure sensitive adhesive precursor.

According to another aspect of the present invention, it is provided a radiation crosslinked pressure sensitive adhesive obtainable by radiation crosslinking the radiation crosslinkable pressure sensitive adhesive precursor precursor as above described.

In another aspect, it is provided a radiation crosslinked pressure sensitive adhesive, as above described, coated on a substrate, wherein the radiation crosslinked pressure sensitive adhesive coating has preferably a thickness of at least 25µm, at least 40µm, 50 µm or greater than 50 µm, 70 µm or greater than 70 µm, 80 µm or greater than 80 µm, 90 µm or greater than 90 µm, or even 100 µm or greater than 100 µm.

Advantageously, the radiation crosslinked pressure sensitive adhesive as above described is hot melt processable.

The radiation crosslinked pressure sensitive adhesives and radiation crosslinked pressure sensitive adhesive precursors of the invention, in particular the hot melt and solution processable adhesives and precursors, may advantageously be used to prepare a wide range of adhesive tapes and articles. Many of these tapes and articles contain backings or other substrates to support the layer of adhesive. Other adhesive tapes and articles do not contain a backing or substrate layer and therefore are free standing adhesive layers. Double-sided tapes are an example of such an adhesive article. Double-sided tapes, also called "transfer tapes", are adhesive tapes that have adhesive on both exposed surfaces. In some transfer tapes, the exposed surfaces are simply the two surfaces of a single adhesive layer. Other transfer tapes are multi-layer transfer tapes with at least two adhesive layers that may be the same or different, and in some instances intervening layers that may not be adhesive layers. For example, a multi-layer transfer tape may be a 3 layer construction with an adhesive layer, a film layer and another adhesive layer. The film layer can provide handling and/or tear strength or other desirable properties. In this disclosure, double-sided adhesives are prepared that comprise one free standing layer of pressure sensitive adhesive.

Since the double-sided adhesives are free standing, they must have sufficient handling strength to be handled without the presence of a supporting layer. However, in many aspects it is desirable that the adhesive layer be readily tearable, that is to say that the adhesive layer can be readily torn by hand without requiring the use of a cutting implement such as a knife, scissors, or a razor blade.

Advantageously, the methods described in this disclosure may be used to form a variety of adhesive articles. Among these adhesive articles are tapes, including transfer tapes. As described above, transfer tapes may be free standing adhesive films with adhesive on both exposed surfaces. Transfer tapes are widely used in the printing and paper making industries for making flying splices, as well being used for a variety of bonding, mounting, and matting applications both by industry and by consumers.

Transfer tapes can be prepared in particular by hot melt coating the hot melt blends described above onto a release surface such as a release liner. "Release liners" are well known film articles that have a low affinity for adhesives, especially pressure sensitive adhesives. A wide variety of release liners are known and are suitable for use with the pressure sensitive adhesives of this disclosure. Exemplary release liners include those prepared from paper (e.g., Kraft paper) or polymeric material (e.g., polyolefins such as polyethylene or polypropylene, ethylene vinyl acetate, polyurethanes, polyesters such as polyethylene terephthalate, and the like). At least some release liners are coated with a layer of a release agent such as a silicone-containing material or a fluorocarbon-containing material. Exemplary release liners include, but are not limited to, liners commercially available from CP Film (Martinsville, Va.) under the trade designation "T-30" and "T-10" that have a silicone release coating on polyethylene terephthalate film. The liner can have a microstructure on its surface that is imparted to the adhesive to form a microstructure on the surface of the adhesive layer. The liner can then be removed to expose an adhesive layer having a microstructured surface.

In many transfer tape embodiments, it is desirable that the transfer tape be hand tearable, that is to say that the dispensed adhesive can be torn by hand without the need for cutting of the transfer tape. This is particularly true when the transfer tape is dispensed from a bladeless hand held dispenser, such as the SCOTCH ATG dispensers commercially available from 3M Company, St. Paul, MN. The pressure sensitive adhesives of the present disclosure not only have the handling strength required of transfer tape, but also are typically hand tearable.

Accordingly, and in another aspect, the present invention relates to the use of a radiation crosslinkable pressure sensitive adhesive precursor as above described, for the manufacture of an adhesive tape, preferably a double-sided tape.
Item 1 is a radiation crosslinkable pressure sensitive adhesive precursor comprising:
   a) an acrylate base polymer
   b) a co-polymerized type (II) photocrosslinker, in a amount greater than 0.1 parts by weight per 100 parts by weight of acrylate base polymer;
   c) a co-polymerized hydrogen-donating monomer; and
   d) a hydrocarbon tackifying resin, in an amount greater than 40 parts by weight per 100 parts by weight of acrylate base polymer,
   and wherein either the total acid content of a), b), and c) is zero or the total acid content of a), b), and c) is greater than zero and not more than 3%.
Item 2 is the precursor of item 1, wherein the amount of co-polymerized type (II) photocrosslinker is in amount greater than 0.15 parts, or greater than 0.30 parts by weight per 100 parts by weight of acrylate base polymer.
Item 3 is a precursor according to any of item 1 or 2, wherein the amount of acrylate base polymer, co-polymerized type (II) photocrosslinker, co-polymerized hydrogen-donating monomer and hydrocarbon tackifier are selected such as to provide the radiation crosslinked pressure sensitive adhesive obtained by radiation crosslinking, preferably UV radiation crosslinking, the radiation crosslinkable pressure sensitive adhesive precursor, with a static shear at 70°C of at least 2000 minutes, preferably at least 4000 minutes, more preferably at least 6000 minutes, even more preferably at least 8000 minutes, still more preferably at least 10000 minutes, when measured according to static shear test ASTM D3654.
Item 4 is a precursor according to item 3, wherein the static shear at 70°C is measured on a UV crosslinked pressure sensitive adhesive layer coated on a substrate, wherein the thickness of the pressure sensitive adhesive layer is typically between about 25 µm to about 100 µm, and wherein the UV crosslinking is typically operated with 150-1200 mJ/cm² of total UV (sum of UV-A, UV-B and UV-C; measured with a Power Puck from EIT Inc.)
Item 5 is a precursor according to any of the preceding items, wherein the amount of tackifying resin is greater than 45, preferably 50 or greater than 50, more preferably 60 or greater than 60, more preferably 80 or greater than 80, even more preferably 100 or greater than 100 parts by weight per 100 parts by weight of acrylate base polymer.
Item 6 is a precursor according to any of the preceding items, which comprises:
   a) an acrylate base polymer;
   b) from 0.1 to 1 parts, from 0.11 to 1 parts, from 0.16 to 1 parts, from 0.18 to 0.70 parts, or even from 0.20 to 0.50 parts by weight per 100 parts by weight of acrylate base polymer, of a co-polymerized type (II) photocrosslinker;
   c) from 0.05 to 30 parts, from 0.05 to 10 parts, from 0.05 to 5 parts, from 0.10 to 3 parts, or even from 0.15 to 2 parts by weight per 100 parts by weight of acrylate base polymer, of a co-polymerized hydrogen-donating monomer; and
   d) from 40 to 100 parts, from 40 to 80 parts, or even from 50 to 60 parts by weight per 100 parts by weight of acrylate base polymer, of a hydrocarbon tackifying resin
   and wherein either the total acid content of a), b) and c) is zero or the total acid content of a), b), and c), is greater than zero and not more than 3% by weight, optionally no more than 2%, no more than 1.5%, no more than 1% or no more than 0.5% .
Item 7 is a precursor according to any of the preceding items, which comprises:
   a) an acrylate base polymer
   b) from 0.10 to 1 wt%, from 0.10 to 0.5 wt%, from 0.15 to 0.30 wt%, based on the weight of the acrylate base polymer, of a co-polymerized type (II) photocrosslinker;
   c) from 0.05 to 30 wt%, from 0.05 to 10 wt%, from 0.05 to 5 wt%, from 0.1 to 3 wt%, or even from 0.15 to 2 wt% based on the weight of the acrylate base polymer, of a co-polymerized hydrogen-donating monomer; and
   d) from 40 to 150 wt%, from 45 to 100 wt%, or even from 60 to 80 wt% based on the weight of the acrylate base polymer, of a hydrocarbon tackifying resin.
   and wherein either the total acid content of a), b) and c) is zero or the total acid content of a), b), and c) is greater than zero and not more than 3% by weight, optionally no more than 2%, no more than 1.5%, no more than 1% or no more than 0.5%.
Item 8 is a precursor according to any of the preceding items, wherein the acrylate base polymer is obtained from a polymerizable mixture comprising at least one linear or branched alkyl (meth)acrylate monomer, wherein the linear or branched alkyl group of the alkyl (meth)acrylate monomer preferably comprises from 1 to 24, more preferably from 4 to 20, even more preferably 6 to 18, still more preferably from 8 to 12 carbon atoms.
Item 9 is a precursor according to item 8, wherein the linear or branched alkyl (meth)acrylatc monomer is selected from the group consisting of methyl acrylate, ethyl acrylate, propyl acrylate, such as n-propyl acrylate and isopropyl acrylate, butyl acrylate, such as n-butyl acrylate and isobutyl acrylate, pentyl acrylate, such as n-pentyl and iso-pentyl acrylate, hexyl acrylate, such as n-hexyl acrylate and iso-hexyl acrylate, octyl acrylate, such as iso-octyl acrylate and 2-ethylhexyl acrylate, nonyl acrylate, decyl acrylate, such as 2-propylheptyl acrylate, dodecyl acrylate, lauryl acrylate, octadecyl acrylate, such as stearyl acrylate and C18 acrylate derived from Guerbet alcohols, such as 2-heptyl undecanol. Item 10 is a precursor according to any of item 8 or 9, wherein the alkyl (meth)acrylate monomer is selected from the group consisting of iso-octyl acrylate, 2-ethylhexyl acrylate, 2-propyl heptyl acrylate, and any combinations or mixtures thereof.
Item 12 is a precursor according to any of the preceding items, wherein the acrylate base polymer comprises a co-polymerized type (II) photocrosslinker.
Item 13 is a precursor according to any of the preceding items, further comprising a second polymer that is distinct from the acrylic base polymer, the second polymer comprising one or more of the co-polymerized type (II) photocrosslinker and the co-polymerized hydrogen donating monomer, and optionally further comprising one or more acrylic monomers.
Item 13 is a precursor according to any of the preceding items, wherein the acrylate base polymer comprises a co-polymer of iso-octyl acrylate, 2-ethylhexyl acrylate, 2-propyl heptyl acrylate, branched octadecyl acrylate, such as C-18 acrylate derived from Guerbet alcohols like 2-heptyl undecanol, or any combinations or mixtures thereof and optional acrylic acid.
Item 14 is a precursor according to any of the preceding items, wherein the co-polymerized type (II) photocrosslinker is selected from the group of mono-ethylenically unsaturated aromatic ketones, and is preferably selected from the group consisting of para-acryloxybenzophenone (ABP), para-acryloxyethoxybenzophenone (AEBP), para-N-(methylacryloxyethyl)-carbamoylethoxybenzophenone, 4-acryloyloxydiethoxy-4-chlorobenzophenone, para-acryloxyacetophenone, ortho-acrylamidoacetophenone, acrylated anthraquinones, and any combinations or mixtures thereof.
Item 15 is a precursor according to any of the preceding items, wherein the co-polymerized type (II) photocrosslinker is selected from the group of para-acryloxybenzophenone (ABP), para-acryloxyethoxybenzophenone (AEBP), and any combinations or mixtures thereof.
Item 16 is a precursor according to any of the preceding items, wherein the co-polymerized hydrogen-donating monomer is selected from the group of monomers comprising at least one hydrogen atom on a carbon atom in a α-position to a nitrogen, oxygen or sulfur atom. More preferably, the co-polymerized hydrogen-donating monomer is selected from the group consisting of (meth)acrylamide, (meth)acrylate, urethane (meth)acrylate and vinylic monomers containing at least one nitrogen functional group, nitrogen functional group preferably being a tertiary amine functional group.
Item 17 is a precursor according to any of the preceding items, wherein the co-polymerized hydrogen-donating monomer is selected from the group consisting of N,N-dimethyl (meth)acrylamide; N,N-diethyl (meth)acrylamide; N-vinyl caprolactam; N-Vinylpyrrolidone; N-isopropyl (meth)acrylamide; N,N-dimethylaminoethyl (meth)acrylate; 2-[[(butylamino)carbonyl]oxy]ethyl (meth) acrylate N,N-dimethylaminopropyl (meth)acrylamide; N,N-diethylaminopropyl (meth)acrylamide; N,N-diethylaminoethyl (meth)acrylate; N,N-dimethylaminopropyl (meth)acrylate; N,N-diethylaminopropyl (meth)acrylate; N,N-dimethylaminoethyl (meth)acrylamide; N,N-diethylaminoethyl (meth)acrylamide; (meth)acryloyl morpholine, vinylacetamide and any combinations or mixtures thereof. Preferably still, the co-polymerized hydrogen-donating monomer for use herein is selected from the group consisting of N,N-dimethyl acrylamide;N,N-dimethylaminoethyl (meth)acrylate; N,N-diethylaminoethyl (meth)acrylate and any combinations or mixtures thereof.
Item 18 is a precursor according to any of the preceding items, wherein the co-polymerized hydrogen-donating monomer is selected from the group consisting of N,N-dimethylaminoethyl (meth)acrylate; N,N-diethylaminoethyl (meth)acrylate, N,N-diethylaminopropyl (meth)acrylate, N,N-dimethylaminopropyl (meth)acrylate and any combinations thereof.
Item 19 is a precursor according to any of the preceding items, wherein the co-polymerized type (II) photocrosslinker is co-polymerized with the acrylate base polymer.
Item 20 is a precursor according to any of the preceding items, wherein the co-polymerized type (II) photocrosslinker is co-polymerized with a crosslinking polymer distinct from the acrylate base polymer.
Item 21 is a precursor according to any of the preceding items, wherein the co-polymerized hydrogen-donating monomer is co-polymerized with the acrylate base polymer.
Item 22 is a precursor according to any of the preceding items, wherein the co-polymerized hydrogen-donating monomer is co-polymerized with a crosslinking polymer distinct from the acrylate base polymer.
Item 23 is a precursor according to any of the preceding items, wherein the co-polymerized type (II) photocrosslinker and the co-polymerized hydrogen-donating monomer are co-polymerized with the acrylate base polymer.
Item 24 is a precursor according to any of the preceding items, wherein the co-polymerized type (II) photocrosslinker and the co-polymerized hydrogen-donating monomer are co-polymerized with a crosslinking polymer distinct from the acrylate base polymer.
Item 25 is a precursor according to any of items 20 to 24, wherein the crosslinking polymer is an acrylate crosslinking polymer.
Item 26 is a precursor according to any of items 20 to 25, wherein the crosslinking polymer is obtainable from a polymerizable mixture comprising at least one linear or branched alkyl (meth)acrylate monomer, wherein the linear or branched alkyl group of the alkyl (meth)acrylate monomer preferably comprises from 1 to 24, more preferably from 4 to 20, even more preferably 6 to 15, still more preferably from 6 to 10 carbon atoms.
Item 27 is a precursor according to item 26, wherein the linear or branched alkyl (meth)acrylate monomer is selected from the group consisting of methyl acrylate, ethyl acrylate, propyl acrylate, such as n-propyl acrylate and isopropyl acrylate, butyl acrylate, such as n-butyl acrylate and isobutyl acrylate, pentyl acrylate, such as n-pentyl and iso-pentyl acrylate, hexyl acrylate, such as n-hexyl acrylate and iso-hexyl acrylate, octyl acrylate, such as iso-octyl acrylate and 2-ethylhexyl acrylate, nonyl acrylate, decyl acrylate, such as 2-propylheptyl acrylate, dodecyl acrylate, lauryl acrylate, octadecyl acrylate, such as stearyl acrylate and C18 acrylate derived from Guerbet alcohols such as 2-heptyl undecanol.
Item 28 is a precursor according to any of items 20 to 27, wherein the crosslinking polymer is obtained from a polymerizable mixture comprising monomers selected from the group consisting of iso-octyl acrylate and 2-ethylhexyl acrylate
Item 29 is a precursor according to any of items 24 to 28, wherein the crosslinking polymer is obtained from a polymerizable mixture which either has an acid content of zero or has an acid content above zero, but no more than 3%, optionally no more than 2%, or 1.5%, or 1%, or 0.5%.
Item 30 is a precursor according to any of the preceding items, wherein the hydrocarbon tackifying resin is selected from the group consisting of terpenes, aliphatic C5 hydrocarbons, aromatic C9 hydrocarbons, partially hydrogenated versions of any of the foregoing, fully hydrogenated versions of any of the foregoing and any combinations thereof.
Item 31 is a precursor according to any of the preceding items, wherein the hydrocarbon tackifying resin is selected from the group of C5 to C9 hydrocarbon resins.
Item 32 is a precursor according to any of the preceding items, which is hot melt processable.
Item 33 is a radiation crosslinked pressure sensitive adhesive obtainable by crosslinking the precursor according to any of items 1 to 32.
Item 34 is a radiation crosslinked pressure sensitive adhesive according to item 33 coated on a substrate thereby forming a crosslinked pressure sensitive adhesive layer, wherein the radiation crosslinked pressure sensitive adhesive layer preferably has a thickness of at least 25 µm, 50 µm or greater than 50 µm, 70 µm or greater than 70 µm, 80 µm or greater than 80 µm, 90 µm or greater than 90 µm, 100 µm, or even greater than 100 µm.
Item 35 is a radiation crosslinked pressure sensitive adhesive according to any of item 33 or 34 which is hot melt processable.
Item 36 is a method of preparing a radiation crosslinked pressure sensitive adhesive, comprising the steps of:
   a) providing a radiation crosslinkable pressure sensitive adhesive precursor according to any of items 1 to 31; and
   b) radiation crosslinking the radiation crosslinkable pressure sensitive adhesive precursor.
Item 37 is the method of item 36, comprising the steps of:
   a) providing an acrylate base polymer
   b) providing a co-polymerized type (II) photocrosslinker, in an amount greater than 0.1, typically greater than 0.15, more typically greater than 0.30 parts by weight per 100 parts by weight of acrylate base polymer;
   c) providing a co-polymerized hydrogen-donating monomer;
   d) providing a hydrocarbon tackifying resin, in an amount greater than 40 parts by weight per 100 parts by weight of acrylate base polymer;
   e) mixing the acrylate base polymer, the co-polymerized type (II) photocrosslinker, the co-polymerized hydrogen-donating monomer and the tackifying resin thereby forming a radiation crosslinkable pressure sensitive adhesive precursor; and
   f) radiation crosslinking, preferably UV radiation crosslinking, the radiation crosslinkable pressure sensitive adhesive precursor thereby forming a radiation crosslinked pressure sensitive adhesive.
   and wherein either the total acid content of a), b) and c) is zero or the total acid content of a), b) and c) is no more than 3% by weight, optionally no more than 2%, no more than 1.5%, no more than 1% or no more than 0.5%.
Item 38 is a method according to any of items 36 or 37, wherein the co-polymerized type (II) photocrosslinker is co-polymerized with the acrylate base polymer.
Item 39 is a method according to any of items 36 to 38, wherein the co-polymerized type (II) photocrosslinker is co-polymerized with a crosslinking polymer distinct from the acrylate base polymer.
Item 40 is a method according to any of items 36 to 39, wherein the co-polymerized hydrogen-donating monomer is co-polymerized with the acrylate base polymer.
Item 41 is a method according to any of items 36 to 40, wherein the co-polymerized hydrogen-donating monomer is co-polymerized with a crosslinking polymer distinct from the acrylate base polymer.
Item 42 is a method according to any of items 36 to 41, wherein the co-polymerized type (II) photocrosslinker and the co-polymerized hydrogen-donating monomer are co-polymerized with the acrylate base polymer.
Item 43 is a method according to any of items 36 to 42, wherein the co-polymerized type (II) photocrosslinker and the co-polymerized hydrogen-donating monomer are co-polymerized with a crosslinking polymer distinct from the acrylate base polymer.
Item 44 is a method according to any of items 38 to 43, wherein the crosslinking polymer is an acrylate crosslinking polymer.
Item 45 is a method according to any of items 36 to 44, wherein the amount of acrylate base polymer, co-polymerized type (II) photocrosslinker, co-polymerized hydrogen-donating monomer and hydrocarbon tackifier are selected such as to provide the radiation crosslinked pressure sensitive adhesive obtained by radiation crosslinking, preferably UV radiation crosslinking, the radiation crosslinkable pressure sensitive adhesive precursor, with a static shear at 70°C of at least 2000 minutes, preferably at least 4000 minutes, more preferably at least 6000 minutes, even more preferably at least 8000 minutes, still more preferably at least 10000 minutes, when measured according to static shear test ASTM D3654.
Item 46 is the method of item 45, wherein the static shear at 70°C is measured on a UV crosslinked pressure sensitive adhesive layer coated on a substrate, wherein the thickness of the pressure sensitive adhesive layer is of about 100 µm, and wherein the UV crosslinking is typically operated with 150-1200 mJ/cm² of total UV (sum of UV-A, UV-B and UV-C; measured with a Power Puck from EIT inc.)
Item 47 is a method according to any of items 36 to 46, comprising the step of melt mixing the acrylate base polymer, the co-polymerized type (II) photocrosslinker, the co-polymerized hydrogen-donating monomer and the hydrocarbon tackifying resin thereby forming a hot melt processable radiation crosslinkable pressure sensitive adhesive precursor.
Item 48 is the use of a radiation crosslinkable pressure sensitive adhesive precursor according to any of items 1 to 32 for the manufacture of an adhesive tape, preferably a single or double-sided tape or a label.

### EXAMPLES

The invention is further illustrated by the following examples. These examples are for illustrative purposes only and are not meant to be limiting on the scope of the appended claims.

### Test Methods

Unless otherwise indicated, prior to testing all adhesives were conditioned at ambient conditions (23°C +/- 2°C and 50% +/- 5% relative humidity) during 12 hours. Alternatively, as indicated in the examples, the adhesives were aged during one week in an air circulated oven at 70°C prior to testing.

### 1. Static shear strength on stainless steel (SS):

The static shear strength test method determines the ability of pressure-sensitive adhesive tapes to remain adhered under constant load applied parallel to the surface of the tape and substrate. The test was performed according to ASTM D 3654.

Static shear strength was measured on stainless steel panels, with bright annealed finish (in accordance with Specification ASTM A666) having a dimension of 50 mm by 125 mm (and a minimum thickness of 1.1 mm). Prior to use, the stainless steel panels were cleaned by wiping the panels with a lint free tissue first with a pass of methyl ethyl ketone (MEK), followed by a wipe with n-heptane and finally another pass with methyl ethyl ketone (MEK). Wiping of the panels per pass of solvent was always done until dryness.

A 1 inch (2.54 cm) wide strip of adhesive was cut from the tape by using a specimen cutter holding two single-edge razor blades in parallel planes, the blades spaced 1 inch (2.54 cm) apart. The adhesive strip was then placed onto a clean stainless steel panel covering a 1 inch by 1 inch (2.54 cm x 2.54 cm) area of the stainless steel panel. The adhesive strip was then over-rolled twice in each direction using a hand-held rubber-covered 2 kg hand-roller at an approximate rate of 10mm +/- 0.4 mm/s. The test was performed after a dwell time of 20 minutes. For the static shear test at room temperature, a 1 kg weight was used as the static load and the test samples were placed on an automated timing apparatus in an air conditioned room at ambient conditions (23°C +/- 2°C and 50% +/- 5% relative humidity). For the static shear test at 70°C, a 500 gram weight was used as the static load, and the test samples were placed on an automated timing apparatus in an air circulated oven at 70°C. The time when the load dropped was recorded (min). When the load did not fall down after 10000 min, the test was discontinued and the result identified as 10000+. The data reported are the averages of three measurements.

### 2. 180° Peel adhesion

The 180° peel adhesion was measured according to ASTM Designation: D3330/D330M-04. The 180° peel adhesion was measured against stainless steel, polyethylene (PE) and polypropylene (PP) test substrates. The stainless steel panels had a bright annealed finish (in accordance with Specification ASTM A666, Type 302 or 304). The PE test panels were PE covered aluminum panels made by selecting a 13 mils thick (330 micrometers) polyethylene film with similar dimensions as the aluminum panel, the PE film made from polyethylene (PE) pellets being available under trade designation "VORIDIAN POLYETHYLENE 1550P" from Eastman Chemical Co. (Kingsport, Tenn., USA), and fixing the PE film with an adhesive film to the aluminum plate. Test surface of the PE selected was the smooth surface surface side, unless otherwise indicated. The PP test panels were not-coloured panels obtained under the trade designation SIMONA DWST from ROCHOLL Gmbh. Prior to use, the stainless steel test panels were cleaned by wiping the panels with a lint free tissue first with a pass of methyl ethyl ketone (MEK), followed by a wipe with n-heptane and finally another pass with methyl ethyl ketone (MEK). Wiping of the panels per pass of solvent was always done until dryness. PP panels were cleaned once with a 90/10 mixture of isopropylalcohol (IPA) and water. The PE covered aluminum panels were not cleaned.

In a climate room set at ambient conditions (23°C +/- 2°C and 50% +/- 5% relative humidity), 1 inch (2.54 cm) wide adhesive strips having a length of approximately 300mm were cut from the conditioned samples using a specimen cutter holding two single-edged razor blades in parallel planes of the adhesive. The strip was placed without pressure onto a (cleaned) test panel, after which the strip was fixed onto the test panel using a 2 kg hand-held rubber-covered roller at a rate of 10 +/- 0.5 mm/s with 2 passes in each direction. After a dwell time of 20 minutes in the climate room, a 180° peel test was performed using a FP-2255 Peel Tester (manufactured by Thwing-Albert Instrument Company). The adhesive strip was pulled at a speed of 300mm/min. Three measurements were made per example and the average was recorded in N/inch.

### 3. 90° Peel adhesion

### The 90° peel test was done according to Test Method. Finat No. 2, 8^{th} edition 2009).

Pressure sensitive adhesive films were laminated prior to testing onto a 50 µm thick PET backing (commercially available as Hostaphan RN 50, primed with primer P94, available from 3M).
Adhesive strips having a width of 1 inch (2.54 mm) and a length of at least 120 mm were cut in machine direction. After removal of the liner, the test strips were placed onto a cleaned test panel using light finger pressure. The test samples were rolled four times with a standard FINAT test roller (weight 2 kg) at a speed of approximately 10 mm per second to obtain intimate contact between the adhesive mass and the surface. The test samples were allowed to dwell for 24 hours at ambient room temperature (23°C +/- 2°C, 50% relative humidity +/-5%) prior to testing. For peel testing the test samples were in a first step clamped in the lower movable jaw of a Zwick tensile tester (Model Z020 commercially available from Zwick/Roell GmbH, Ulm, Germany). The pressure sensitive adhesive film strips were folded back at an angle of 90° and their free ends grasped in the upper jaw of the tensile tester in a configuration commonly utilized for 90° measurements. The tensile tester was set at 300 mm per minute jaw separation rate. Test results were expressed in Newton per inch (N/in). The quoted peel values are the averages of three 90°-peel measurements.

### 4. Molecular weight

The molecular weight of the acrylate base polymer and of the crosslinker was determined by measuring the inherent viscosity, according to ASTM D 2857. The inherent viscosity was measured on a 0.3g/dl solution of the base polymer or the crosslinker in ethyl acetate, at 25°C, using a Canon Fenske viscosimeter. The values of inherent viscosity are expressed in dl/g.

### List of materials :

| **Designation** | **Description** | **Supplier** |
|---|---|---|
| NNDMA | N,N-Dimethylacrylamide | TCI |
| DMAEMA | N,N-Dimethylaminoethyl methacrylate | Evonik |
| DMAPAA | N,N-Dimethylamino-propylacrylamide | KOHJIN |
| Vinyl acetamide | | Polysciences |
| NVP | N-vinylpyrrolidone | ISP |
| ACMO | Acryloyl morpholine | KOHJIN |
| Acrylamide | | TCI |
| 2PHA | 2 propyl heptyl acrylate | BASF |
| DMAEA | N,N-Dimethyl amino ethyl acrylate | Evonik |
| IOA | Isooctyl acrylate | 3M |
| AA | Acrylic acid | BASF |
| ABP | 4-Acryloxybenzophenone | 3M |
| AEBP | para-acryloxyethoxybenzophenone | 3M |
| Vazo 601 | Dimethyl-2,2'-azobisisobutyrate | Wako Chemicals GmbH |
| Ethyl Acetate | | DOW |
| Heptane | | Exxon |
| IOTG | Isooctylthioglycolate | Arkema |
| Irgacure 651 | 2,2-Dimethoxy-1,2-diphenylethan-1-one | BASF |
| C18 Acrylate | Acrylate derived from Guerbet alcohol, prepared according to WO2011/119363, example GM4 | |
| Bisamide | 1,1'-(1,3-phenylene dicarbonyl)-bis-(2-methylaziridine) CAS No. 7652-64-4) | |
| Foral™ 85E | a glycerol ester of highly hydrogenated refined gum rosin | Eastman |
| Regalite™ R9100 | Hydrocarbon Resin, partially hydrogenated water-white inert thermoplastic resin derived from petrochemical feedstock | Eastmann |
| Regalite™ R7100 | Hydrocarbon Resin, partially hydrogenated water-white inert thermoplastic resin derived from petrochemical feedstocks. | Eastmann |
| Regalite™ R1100 | Hydrocarbon Resin, low molecular weight fully hydrogenated, water-white, inert, thermoplastic resin derived from petrochemical feedstocks | Eastmann |
| Piccotac 8090E | Aromatic modified aliphatic hydrocarbon resin | Eastmann |
| Escorez™ 1102 | Aliphatic hydrocarbon resin | ExxonMobil |
| Escorez™ 1310LC | premium, aliphatic hydrocarbon resin with a narrow molecular weight distribution | ExxonMobil |
| Escorez™ 2173 | narrow molecular weight aromatic modified aliphatic hydrocarbon resin | ExxonMobil |
| Escorez™ 2203LC | premium aromatic modified aliphatic hydrocarbon resin with a narrow molecular weight distribution | ExxonMobil |
| Pinerez™ 2394E | Rosin Ester | Lawter |
| Pineclear™ 2498E | Rosin Ester | Lawter |
| Komotac™ KH85 | Rosin Ester | Komo |

### Preparative Examples B0 to B18

### Acrylate base polymers

The composition of the acrylate base polymers used in the examples and comparative examples is provided in Table 1 below.

### Solution polymerization

Acrylate base polymers B0 to B16 were produced via solution polymerization, in a solvent mixture of ethyl acetate/heptane (typically in a ratio of 85/15) at 45% solids. The acrylate monomers, with optional acrylic acid, copolymerizable type(II) photocrosslinker and/or hydrogen donating monomer (as indicated in table 1) were dissolved in the solvent mixture and allowed to polymerize. The polymerization was initiated by an azo initiator (Vazo 601 ; 0.2% by weight, based on the monomers) and the mixture was polymerized under constant stirring for 20 hours at 60°C. After polymerization, the inherent viscosity was measured according to the method outlined above. The composition of acrylate base polymers is provided in table 1.

### Preparation of base polymer B17 hot melt

Acrylate base polymer B17 was bulk polymerized under UV light sealed in ethylene vinyl acetate film pouches as described in U.S. Patent No. 6,294,249 (Hamer et al.). Two sheets of 2.5 mil (51 micrometer) thick ethylene vinyl acetate, commercially available as VA-24 from Pliant Corp. of Evansville, IN, are heat sealed on the lateral edges and the bottom to form a rectangular pouch on a liquid form, fill, and seal machine. The pouch was filled with a pre-adhesive composition having 99.5 parts IOA, 0.5 parts AA, 0.20 phr of Irgacure 651, 0.10 phr ABP and 0.04 IOTG. The filled packages were then heat sealed at the top in the cross direction through the monomer to form individual pouches measuring 13.4 cm by 4.3 cm by about 0.4 cm thick containing 25 grams of the pre-adhesive composition. The pouches were placed in a water bath that is maintained between about 16°C and 32°C and exposed to ultraviolet radiation (supplied by lamps having about 90 percent of the emissions between 300 and 400 nanometers (nm), and a peak emission at 351 nm) at an intensity of 4.55 mW/cm² for 21 minutes. The IV of acrylate base polymer B17 was 1.04

**Table 1: Composition of acrylate base polymers (amount in parts per hundred)**

| Base polymer | IOA | C-18 acrylate | 2-PHA | AA | DMAEMA | ABP | IV (dl/g) |
|---|---|---|---|---|---|---|---|
| B0 | 100.0 | / | / | / | / | 0.15 | 0.90 |
| B1 | 80.0 | 20.0 | / | / | / | 0.15 | 0.86 |
| B2 | 60.0 | 40.0 | / | / | / | 0.15 | 0.80 |
| B3 | 80.0 | / | 20.0 | / | / | 0.15 | 0.81 |
| B4 | 60.0 | / | 40.0 | / | / | 0.15 | 0.81 |
| B5 | 40.0 | / | 60.0 | / | / | 0.15 | 0.87 |
| B6 | 99.5 | / | / | 0.5 | / | 0.10 | 0.92 |
| B7 | 59.5 | / | 40.0 | 0.5 | / | 0.15 | 0.90 |
| B8 | 59.5 | / | 40.0 | 0.5 | / | / | 0.91 |
| B9 | 59.5 | / | 40.0 | 0.5 | / | 0.10 | 0.91 |
| B10 | 59.5 | 40.0 | / | 0.5 | / | 0.15 | 0.77 |
| B11 | / | / | 99.5 | 0.5 | / | 0.10 | 0.65 |
| B12 | 59.3 | 40.0 | / | 0.5 | 0.2 | 0.10 | 0.90 |
| B13 | 59.0 | 40.0 | / | 0.5 | 0.5 | 0.10 | 0.84 |
| B14 | 39.5 | / | 60.0 | 0.5 | / | 0.10 | 0.86 |
| B15 | 100.0 | / | / | / | / | 0.05 | 0.89 |
| B16 | 100.0 | / | / | / | / | / | 1.01 |
| B17* | 99.5 | / | / | 0.5 | / | 0.10 | 1.04 |
| B18 | 96 | / | / | 4 | / | 0.10 | 0.89 |

| | | | | | | | |
|---|---|---|---|---|---|---|---|
| *: hot melt | | | | | | | |

### Preparative Examples XL1 to XL9

### Crosslinking polymers

The crosslinking polymers used for the examples were produced via solution polymerization in ethyl acetate, at 45% solids. Therefore, unless otherwise noted, the acrylate monomers, hydrogen donating monomer and AEBP were dissolved in ethyl acetate. The polymerization was started by an azo initiator (Vazo 601) and the polymerization took place under constant stirring for 20 hours at 60°C. The so formed crosslinking polymer solutions were used as such for the examples that were prepared from solution. For the hot melt experiments, the solvent was stripped. The composition of the polymeric crosslinkers and their IV are represented in table 2.

**Table 2: Composition of Crosslinking polymers**

| Crosslinking polymer | IOA | Hydrogen donating monomer | | AEBP | IV |
|---|---|---|---|---|---|
| | | Type | amount | | |
| XL1 | 90 | DMAEA | 5 | 5 | 0.4 (**) |
| XL2 | 90 | DMAEA | 5 | 5 | 0.52 |
| XL3 | 90 | DMAEMA | 5 | 5 | 0.4 (**) |
| XL4 | 90 | DMAEMA | 5 | 5 | 0.69 |
| XL5 | 90 | NNDMA | 5 | 5 | 0.55 |
| XL6 | 90 | DMAPAA | 5 | 5 | 0.56 |
| XL7 | 90 | VinylAcetamide | 5 | 5 | 0.58 |
| XL8 | 90 | NVP | 5 | 5 | 0.55 |
| XL9 | 90 | ACMO | 5 | 5 | 0.49 |

| | | | | | |
|---|---|---|---|---|---|
| Note : (**) made at 65°C, with 0.02 parts IOTG chain transfer agent | | | | | |

### Procedures for making adhesive layers

### Solution processing

In the solution processing method, adhesive layers were made by knife coating the solvent based mixture comprising acrylate base polymer, crosslinking polymer and tackifier, onto a white, double-sided siliconized paper liner (available from Mondi Akrosil, USA) having a thickness of 75 µm. The coatings were dried at room temperature during 6 minutes, followed by drying at 85°C during 7 minutes. The thickness of the dried adhesive layer varies as is recorded in the examples. The dried coatings were irradiated with 150-1200 mJ/cm² of total UV (sum of UV-A, UV-B and UV-C ; measured with a Power Puck from EIT inc.), using a medium pressure mercury lamp (available from TCS Technologies). After curing, the adhesive was laminated on a 50µm thick PET liner. The liner side was always used for measuring adhesive properties (180° Peel and Static Shear), as indicated in the test methods above.

### Hot melt processing

In the hot melt processing method, hot melt compounding of the acrylate base polymer, crosslinking polymer and tackifier was run in a twin screw extruder from Werner & Pfleiderer (Stuttgart, Germany) at 160°C and a screw speed of 320 rpm. The hot melt coating itself was done using a rotary rod die. The thickness of the adhesive layer is indicated in the examples. The coated adhesives were cured offline with 150-1200 mJ/cm² of total UV (sum of UV-A, UV-B and UV-C; measured with a Power Puck from EIT inc.) under a medium pressure mercury lamp (available from TCS Technologies). The liner used was a paper liner, siliconized on both sides (available from Mondi Akrosil, Wisconsin, USA), and having a thickness of 75 µm. After curing, the adhesive was laminated on a 50µm thick PET liner. The liner side was always used for measuring adhesive properties (180° Peel and Static Shear as indicated in the test methods above).

### Examples 1 to 7 and Comparative examples C-1 and C-2

Examples 1 to 7 and comparative examples C-1 and C-2 were prepared from solution according to the general procedure for making adhesive layers, as outlined above. The acrylate base polymer, the crosslinking polymer and the tackifier were blended in solution (in amounts as given in table 3) and then coated and cured according to the general procedure for making adhesive layers as outlined above. The coating thickness of the adhesive layers was 50 µm +/- 2 µm. Test specimens were prepared for the static shear and 180° peel measurements as previously described. The test results are presented in Table 4.

**Table 3 Composition of examples 1 to 7 and comparative examples C-1 and C-2**

| Ex No. | Base polymer | | Crosslinking polymer | | Tackifier | |
|---|---|---|---|---|---|---|
| | Type | Parts | Type | Parts | Type | Parts |
| 1 | B0 | 100 | XL1 | 4.0 | Regalite R7100 | 60 |
| 2 | B0 | 100 | XL3 | 4.0 | Regalite R7100 | 60 |
| 3 | B0 | 100 | XL1 | 3.6 | Regalite R7100 | 80 |
| 4 | B0 | 100 | XL1 | 3.6 | Regalite R9100 | 80 |
| 5 | B3 | 100 | XL3 | 3.6 | Regalite R7100 | 80 |
| 6 | B4 | 100 | XL3 | 3.6 | Regalite R9100 | 80 |
| 7 | B5 | 100 | XL3 | 3.6 | Regalite R9100 | 80 |
| C-1 | B0 | 100 | XL1 | 3.2 | Foral 85E | 60 |
| C-2 | B0 | 100 | XL1 | 4.5 | Foral 85E | 80 |

**Table 4 Adhesive Properties of examples 1 to 7 and comparative examples C-1 and C-2**

| Ex No | 180° peel adhesion (N/inch) | | | Static shear 70°C (min) Stainless Steel |
|---|---|---|---|---|
| | Stainless Steel | Polyethylene (smooth) | Polypropylene | |
| 1 | 28.0 | 13.4 | 26.4 | 10000+ |
| 1-aged⁽¹⁾ | 30.6 | 16.8 | NA | 10000+ |
| 2 | 27.5 | 12.8 | 26.2 | 10000+ |
| 2-aged⁽¹⁾ | 30.6 | 15.6 | NA | 10000+ |
| 3 | 31.6 | 12.0 | NA | 430 |
| 4 | 17.9 | 10.7 | NA | 10000+ |
| 5 | 31.0 | 13.3 | 29.5 | 10000+ |
| 6 | 29.4 | 16.3 | 28.5 | 10000+ |
| 7 | 29.2 | 17.3 | 27.8 | 10000+ |
| C-1 | 17.6 | 7.7 | NA | 59 |
| C-2 | 21.6 | 11.2 | NA | 29 |

| | | | | |
|---|---|---|---|---|
| Notes : aged⁽¹⁾ means aged for 1 week at 70°C | | | | |

### Examples 8 to 12

Examples 8 to 12 were prepared from solution according to the general procedure for making adhesive layers, as outlined above. The acrylate base polymer, the crosslinking polymer and the tackifier were blended in solution (in amounts as given in table 5) and then coated and cured according to the general procedure for making adhesive layers as outlined above. The coating thickness of the adhesive compositions was 50 µm +/- 2 µm. Test specimens were prepared for the static shear and 180° peel measurements as previously described.
The adhesives were tested after being conditioned at ambient conditions (referred to as 'initial'). The adhesives were also tested after aging during one week in an air circulated oven at 70°C (referred to as '1 week 70°C'). The test results are listed in table 6.

**Table 5 Composition of adhesives used in examples 8 to 12**

| Ex No. | Base polymer | | Crosslinking polymer | | Tackifier | |
|---|---|---|---|---|---|---|
| | Type | Parts | Type | Parts | Type | Parts |
| 8 | B1 | 100 | XL3 | 3.6 | Regalite R7100 | 80 |
| 9 | B1 | 100 | XL3 | 4.5 | Regalite R7100 | 80 |
| 10 | B1 | 100 | XL3 | 3.6 | Regalite R9100 | 80 |
| 11 | B2 | 100 | XL3 | 3.6 | Regalite R9100 | 80 |
| 12 | B2 | 100 | XL3 | 5.0 | Regalite R9100 | 100 |

**Table 6 Properties of adhesives from examples 8 to 12**

| Example | 180° peel adhesion (N/inch) | | | | Static shear 70°C (min) Stainless Steel | |
|---|---|---|---|---|---|---|
| | Stainless Steel | | Polyethylene (smooth) | | | |
| | Initial | 1 week 70°C | Initial | 1 week 70°C | Initial | 1 week 70°C |
| 8 | 28.8 | NA | 15.5 | NA | 8830 | NA |
| 9 | 32.1 | 30.4 | 16.0 | 16.3 | 10000+ | 10000+ |
| 10 | 23.8 | 26.8 | 14.8 | 16.6 | 10000+ | 10000+ |
| 11 | 24.7 | NA | 15.0 | NA | 10000+ | NA |
| 12 | 26.7 | 30.9 | 17.9 | 17.5 | 10000+ | 10000+ |

### Examples 13 to 17

In examples 13 to 17, the influence of the thickness of the adhesive layer was evaluated. The adhesive formulations were prepared from solution according to the procedure for making adhesive layers as given above. The adhesives were prepared from a blend containing 100 parts acrylate base polymer B0 or B6 as indicated in Table 7, 60 parts Regalite® R7100 tackifier and crosslinking polymer XL1 or XL2 in amounts as given in Table 7. Test specimens were prepared for the static shear and 180° peel measurements as previously described. The test results are presented in Table 7.

**Table 7 Evaluation of tapes having different thickness**

| Ex | Thickness adhesive layer | Base polymer | Crosslinking polymer | | 180° Peel Adhesion SS (N/inch) | 180° Peel Adhesion PE (smooth)(N/inch) | Static shear @70°C SS ; 500 g (min) | Static shear @ RT SS ; 1 kg (min) |
|---|---|---|---|---|---|---|---|---|
| | | | Kind | parts | | | | |
| 13 | 50 µm | B0 | XL1 | 3.2 | NA | 13.4 | 10000+ | 10000+ |
| 14 | 75 µm | B0 | XL1 | 5.0 | NA | 14.5 | 10000+ | 4620 |
| 15 | 48 µm | B6 | XL2 | 5.0 | 24.0 | 12.2 | 10000+ | NA |
| 16 | 75 µm | B6 | XL2 | 5.0 | 27.6 | 15.6 | 10000+ | NA |
| 17 | 130 µm | B6 | XL2 | 5.0 | 36.9 | 22.7 | 2542 | 10000+ |

| | | | | | | | | |
|---|---|---|---|---|---|---|---|---|
| NA : not available (not tested) | | | | | | | | |

### Example 18 and comparative example C-3

Example 18 and comparative example C-3 were prepared from solution according to the general procedure for making adhesive layers as outlined above. Example 18 was prepared from a blend containing 100 parts base polymer B6 (containing 0.5 parts acrylic acid), 60 parts hydrocarbon tackifier Regalite® R7100 and 5 parts crosslinking polymer XL2. Comparative example C-3 was prepared from a blend containing 100 parts base polymer B18 (containing 4 parts acrylic acid), 60 parts rosin ester Foral 85 and 5 parts crosslinking agent XL5. The coating thickness of the adhesives was 100 µm +/- 2 µm. Test specimens were prepared for the static shear and 180° peel measurements as previously described. The test results are presented in Table 8.

**Table 8**

| Ex No | 180° Peel Adhesion (N/inch) | | Static shear @ RT SS ; 1 kg (min) |
|---|---|---|---|
| | Stainless steel (SS) | Polyethylene (smooth) | |
| 18 | 33.1 | 17.5 | 10000+ |
| C-3 | 18.3 | 8.4 | 10000+ |

### Examples 19-24

Examples 19-24 were prepared from solution according to the general procedure for making adhesive layers as outlined above. All adhesives were prepared from a blend containing 100 parts base polymer B6, 60 parts Regalite® R7100 tackifier and 3 parts of various crosslinking polymers as given in table 9. The coating thickness of the adhesives was 50 µm +/- 2 µm. Test specimens were prepared for the static shear and 180° peel measurements as previously described. The test results are presented in Table 9.

**Table 9**

| Ex | Crosslinker | 180° peel Adhesion on SS (N/inch) | 180° Peel Adhesion on PE (smooth) (N/inch) | Static shear @70°C SS ; 500 g (min) |
|---|---|---|---|---|
| 19 | XL6 | 21.4 | 10.5 | 10000+ |
| 20 | XL7 | 23.1 | 13.1 | 10000+ |
| 21 | XL8 | 23.1 | 13.2 | 10000+ |
| 22 | XL9 | 23.2 | 13.2 | 10000+ |
| 23 | XL5 | 23.6 | 12.7 | 10000+ |
| 24 | XL2 | 26.9 | 12.4 | 10000+ |

### Example 25

Example 25 was prepared via hot melt processing according to the general procedure outlined above. Therefore, a blend of 100 parts acrylate base polymer B17, 3 parts crosslinking polymer XL2 and 60 parts tackifier Regalite® R7100 was compounded in a twin screw extruder and then hot melt coated according to the general procedure for hot melt processing as outlined above. The thickness of the adhesive layer was 50 µm +/- 2 µm. The adhesive performance was tested according to the general procedures outlined above. The test results are given in table 10.

**Table 10**

| Ex | 90° peel Adhesion on SS (N/inch) | 90° Peel Adhesion on PE smooth (N/inch) | Static shear @70°C SS ; 500 g (min) |
|---|---|---|---|
| 25 | 21.2 | 17.7 | 10000+ |

### Examples 25 to 31

Examples 25 to 31 were prepared from solution according to the general procedure for making adhesive layers as outlined above. All adhesives with compositions as indicated in table 10 were prepared from a blend containing 100 parts base polymer B7 or B8, 60 or 80 parts Regalite® R9100 tackifier and 5 parts of crosslinking polymer XL3. The coating thickness of the adhesives is listed in table 11. Test specimens were prepared for the 180° Peel Adhesion and Static Shear measurements as previously described. The test results are presented in Table 11.

**Table 11**

| Ex | Thickness coating (µm) | Base polymer | Tackifier R9100 | 180° Peel Adhesion SS (N/inch) | 180° Peel Adhesion PE smooth (N/inch) | Static shear @70°C SS ; 500 g (min) |
|---|---|---|---|---|---|---|
| 26 | 50 +/- 2 | B7 | 80 | 22.3 | 12.9 | 10000+ |
| 27 | 77 +/- 2 | B7 | 80 | 26.2 | 15.7 | 10000+ |
| 28 | 99 +/- 2 | B7 | 80 | 31.4 | 18.9 | 5500 |
| 29 | 128 +/- 2 | B7 | 80 | 36.7 | 26.1 | 2000 |
| 30 | 125 +/- 2 | B8 | 60 | NA | 18.4 | 10000+ |
| 31 | 128 +/- 2 | B8 | 80 | NA | 26.9 | 880 |

### Examples 32 to 39 and comparative examples C-4 to C-7

Examples 32 to 39 and comparative examples C-4 to C-7 were prepared from solution according to the general procedure for making adhesive layers. All adhesives were prepared from a blend containing 100 parts base polymer B10, 2 parts crosslinking polymer XL4 as indicated in table 12. Examples 32 to 39 contained 60 parts hydrocarbon tackifier, whereas comparative examples C-4 to C-7 contained 60 parts rosin ester tackifiers. The coating thickness of the adhesives was 50 µm +/- 2 µm. Test specimens were prepared for the 180° Peel Adhesion and Static Shear measurements as previously described. The test results are presented in Table 12.

**Table 12: evaluation of different tackifiers**

| Ex | Tackifier | 180° Peel Adhesion SS (N/inch) | 180° Peel Adhesion PE (smooth) (N/inch) | 180° Peel Adhesion PP (N/inch) | Static shear @RT SS; 1kg (min) |
|---|---|---|---|---|---|
| 32 | Regalite R7100 | 18.2 | 9.2 | 20.6 | 10000+ |
| 33 | Regalite R9100 | 19.0 | 10.3 | 21.4 | 10000+ |
| 34 | Regalite R1100 | 14.4 | 9.2 | 21.4 | 10000+ |
| 35 | Piccotac 8090E | 24.1 | 13.1 | 23.2 | 10000+ |
| 36 | Escorez 1102 | 17.4 | 11.0 | 18.2 | 10000+ |
| 37 | Escorez 1310LC | 21.4 | 12.9 | 21.7 | 10000+ |
| 38 | Escorez 2173 | 23.9 | 11.8 | 21.4 | 10000+ |
| 39 | Escorez 2203LC | 22.8 | 12.8 | 22.2 | 10000+ |
| C-4 | Foral 85E | 12.5 | 5.9 | 13.3 | 1489 |
| C-5 | Pinerez 2394E | 23.3 | 12.1 | 22.2 | 886 |
| C-6 | Pineclear 2498E | 22.6 | 10.5 | 21.6 | 1110 |
| C-7 | Komotac KH85 | 14.6 | 7.8 | 15.3 | 1353 |

### Examples 40 to 45

Examples 40 to 45 were prepared from solution according to the general procedure. All adhesives were prepared from a blend containing 100 parts of various acrylate base polymers, as indicated in table 13, 2 parts crosslinking polymer XL4 and 80 parts tackifier Escorez 1310. The coating thickness of the adhesives was about 50µm. Test specimens were prepared for the 180° Peel Adhesion and Static Shear measurements as previously described. The test results are presented in Table 13.

**Table 13**

| Ex | Acrylate base polymer | Thickness adhesive layer (µm) | 180° Peel Adhesion SS (N/inch) | 180° Peel Adhesion PE (smooth) (N/inch) | 180° Peel Adhesion PP (N/inch) | Static shear @RT SS ; 1kg (min) |
|---|---|---|---|---|---|---|
| 40 | B11 | 51 | 29.9 | 26.3 | 28.8 | 4760 |
| 41 | B9 | 52 | 20.8 | 18.1 | 24.6 | 6186 |
| 42 | B12 | 50 | 40.4 | 23.4 | 25.7 | 10000+ |
| 43 | B13 | 50 | 36.1 | 24.7 | 35.7 | 10000+ |
| 44 | B10 | 52 | 28.1 | 21.8 | 25.4 | 2453 |
| 45 | B14 | 52 | 24.9 | 20.9 | 30.8 | 5265 |

### Examples 46 to 49

In examples 46 to 49 adhesive compositions having a mixture of hydrocarbon tackifiers were prepared from solution, according to the general procedure for making adhesive layers as outlined above. The adhesives were prepared from a blend containing 100 parts acrylate base polymer B0, 2.5 parts crosslinking polymer XL2 and a mixture of tackifiers Regalite® R7100 and R9100. The coating thickness of the adhesives was 50 µm +/-2µm. The adhesives were tested after being conditioned at ambient conditions (referred to as 'initial') and after aging during one week in an air circulated oven at 70°C (referred to as '1 week 70°C'). The test results are listed in table 14.

**Table 14 Adhesive formulations with a mixture of hydrocarbon tackifiers**

| Ex | Tackifier | 180° peel adhesion (N/inch) | Static shear @70°C SS ; 500 g (min) | |
|---|---|---|---|---|
| | | SS | PE (smooth) | |
| 46 (initial) | 50 parts R7100 + 10 parts R9100 | 22.6 | 11.3 | 10000+ |
| 46 (1 week 70°C) | | 26.7 | 13.8 | 10000+ |
| 47 (initial) | 40 parts R7100 + 20 parts R9100 | 23.7 | 12.5 | 10000+ |
| 47 (1 week 70°C) | | 24.7 | 14.0 | 10000+ |

### Examples 48 to 50

Examples 48 to 50 further illustrate performance of acrylate adhesives having no acrylic acid comonomer. The adhesive compositions were prepared from solution, according to the general procedure for making adhesive layers as outlined above. The composition of the adhesives is given in table 15. The coating thickness of the adhesives was 50 µm +/- 2µm. The adhesives were tested after being conditioned at ambient conditions (referred to as 'initial') and after aging during one week in an air circulated oven at 70°C (referred to as '1 week 70°C'). The test results are listed in table 16.

**Table 15 Composition of acid-free tackified acrylate adhesives**

| Ex No. | Base polymer | | Crosslinking polymer | | Tackifier | |
|---|---|---|---|---|---|---|
| | Type | Parts | Type | Parts | Type | Parts |
| 48 | B15 | 100 | XL4 | 3.5 | Regalite R7100 | 50 |
| 49 | B15 | 100 | XL2 | 6.0 | Regalite R7100 | 50 |
| 50 | B16 | 100 | XL4 | 3.5 | Regalite R7100 | 50 |

**Table 16 Performance results**

| Example | 180° peel adhesion (N/inch) | | | | | | Static shear 70°C (min) ; SS | |
|---|---|---|---|---|---|---|---|---|
| | SS | | PE (smooth) | | PP | | | |
| | Initial | 1 week 70°C | Initial | 1 week 70°C | Initial | 1 week 70°C | Initial | 1 week 70°C |
| 48 | 27.4 | NA | 12.6 | NA | NA | NA | 10000+ | NA |
| 49 | 24.7 | NA | 11.9 | NA | NA | NA | 10000+ | NA |
| 50 | 27.6 | NA | 13.3 | NA | NA | NA | 10000+ | NA |

### Example 51 and Comparative examples C-8 and C-9

Example 51 and comparative examples C-8 and C-9 were prepared from solution, according to the general procedure for making adhesive layers as outlined above. The adhesives were prepared from a blend containing 100 parts acrylate base polymer B6, 60 parts Regalite® R7100 tackifier and crosslinker as given in table 17. The coating thickness of the adhesives was 50 µm +/- 2µm. Test specimens were prepared for the 180° Peel Adhesion and Static Shear measurements as previously described. The test results are presented in Table 17.

**Table 17**

| Ex | Crosslinker | Parts XL | 180° peel adhesion on SS (N/inch | 180° peel adhesion on PE (smooth) | Static shear @ 70°C, SS (min) |
|---|---|---|---|---|---|
| 51 | Crosslinking polymer XL2 | 5 | 24.0 | 12.2 | 10000+ |
| C-8 | NO | / | 32.5 | 17.0 | 3.0 |
| C-9 | Bisamide | 0.18 | 32.0 | 17.1 | 4.0 |

## Claims

1. A radiation crosslinkable pressure sensitive adhesive precursor comprising:
a) an acrylate base polymer
b) a co-polymerized type (II) photocrosslinker, in an amount greater than 0.1 parts by weight per 100 parts by weight of acrylate base polymer;
c) a co-polymerized hydrogen-donating monomer; and
d) a hydrocarbon tackifying resin, in an amount greater than 40 parts by weight per 100 parts by weight of acrylate base polymer,
and wherein either the total acid content of a), b), and c) is zero or the total acid content of a), b), and c) is greater than zero and not more than 3%, wherein the "total acid content" of a), b), and c) refers to the weight percent of polymerized monomers bearing an acid moiety of all of a), b), and c) and the term "acid content" refers to the total content of polymerized monomers bearing an acid moiety.

2. A precursor according to claim 1, wherein co-polymerized type (II) photocrosslinker is a co-monomer in a crosslinking polymer that is distinct from the acrylate base polymer.

3. A precursor according to any preceding claim, wherein the co-polymerized hydrogen-donating monomer is a co-monomer in a crosslinking polymer that is distinct from the acrylate base polymer .

4. A precursor according to any of the preceding claims, wherein the amount of hydrocarbon tackifying resin is greater than 80 parts by weight of acrylate base polymer.

5. A precursor according to any of the preceding claims, wherein the amount of the co-polymerized type (II) photocrosslinker is from 0.18 to 0.7 parts by weight per 100 parts by weight of the acrylate base polymer.

6. A precursor according to any of the preceding claims, wherein the amount of the co-polymerized hydrogen-donating monomer is from 0.1 to 3 parts by weight per 100 parts by weight of the acrylate base polymer.

7. A precursor according to any of the preceding claims, wherein the co-polymerized type (II) photocrosslinker is selected from the group consisting of mono-ethylenically unsaturated aromatic ketones, and is preferably selected from the group consisting of para-acryloxybenzophenone (ABP), para-acryloxyethoxybenzophenone (AEBP), para-N-(methylacryloxyethyl)-carbamoylethoxybenzophenone, 4-acryloyloxydiethoxy-4-chlorobenzophenone, para-acryloxyacetophenone, ortho-acrylamidoacetophenone, acrylated anthraquinones, and any combinations thereof.

8. A precursor according to any of the preceding claims, wherein the co-polymerized hydrogen-donating monomer is selected from the group consisting of (meth)acrylamide, (meth)acrylate monomers containing at least one nitrogen functional group, urethane (meth)acrylate monomers containing at least one nitrogen functional group, vinylic monomers containing at least one nitrogen functional group, and combinations thereof.

9. A precursor according to any of the preceding claims, wherein the co-polymerized hydrogen-donating monomer is selected from the group consisting of N,N-dimethyl (meth)acrylamide; N,N-diethyl (meth)acrylamide; N-vinyl caprolactam; N-vinylpyrrolidone; N-isopropyl (meth)acrylamide; N,N-dimethylaminoethyl (meth)acrylate; 2-[[(butylamino)carbonyl]oxy]ethyl (meth)acrylate; N,N-dimethylaminopropyl (meth)acrylamide; N,N-diethylaminopropyl (meth)acrylamide; N,N-diethylaminoethyl (meth)acrylate; N,N-dimethylaminopropyl (meth)acrylate; N,N-diethylaminopropyl (meth)acrylate; N,N-dimethylaminoethyl (meth)acrylamide; N,N-diethylaminoethyl (meth)acrylamide; (meth)acryloyl morpholine, vinylacetamide and any combinations or mixtures thereof; preferably the co-polymerized hydrogen-donating monomer is selected from the group consisting of N,N-dimethyl acrylamide; N,N-dimethylaminoethyl (meth)acrylate; N,N-diethylaminoethyl (meth)acrylate, vinylacetamide and any combinations or mixtures thereof.

10. An adhesive comprising a crosslinked form of a precursor of any of the preceding claims.

11. An article comprising a precursor of any of claims 1 to 9 or an adhesive of claim 10.

12. The article of claim 11, further comprising one or more adherends.

13. The article of claim 11 or 12, wherein the article is a tape.

14. The article of claim 11 or 12 wherein the article is a label.

15. The article of any of claims 11 to 14, wherein the article further comprises a release liner.

## Patentansprüche

1. Ein strahlungsvernetzbarer Haftklebstoffvorläufer, umfassend:
a) ein Polymer auf Acrylatbasis
b) einen copolymerisierten Photovernetzer vom Typ (II) in einer Menge von mehr als 0,1 Gewichtsteilen pro 100 Gewichtsteile Polymer auf Acrylatbasis;
c) ein copolymerisiertes wasserstoffabgebendes Monomer; und
d) ein Kohlenwasserstoff-Klebrigmacherharz in einer Menge von mehr als 40 Gewichtsteilen pro 100 Gewichtsteile Polymer auf Acrylatbasis,
und wobei entweder der Gesamtsäuregehalt an a), b) und c) null beträgt oder der Gesamtsäuregehalt an a), b) und c) mehr als null beträgt und nicht mehr als 3 % beträgt, wobei der "Gesamtsäuregehalt" an a), b) und c) die Gewichtsprozent an polymerisierten Monomeren von a), b) und c) bedeutet, die einen Säurerest aufweisen, und der Begriff "Säuregehalt" den Gesamtgehalt an polymerisierten Monomeren bedeutet, die einen Säurerest aufweisen.

2. Ein Vorläufer nach Anspruch 1, wobei der copolymerisierte Photovernetzer vom Typ (II) ein Comonomer in einem vernetzenden Polymer ist, das von dem Polymer auf Acrylatbasis verschieden ist.

3. Ein Vorläufer nach einem der vorstehenden Ansprüche, wobei das copolymerisierte wasserstoffabgebende Monomer ein Comonomer in einem vernetzenden Polymer ist, das von dem Polymer auf Acrylatbasis verschieden ist.

4. Ein Vorläufer nach einem der vorstehenden Ansprüche, wobei die Menge an Kohlenwasserstoff-Klebrigmacherharz mehr als 80 Gewichtsteile des Polymers auf Acrylatbasis beträgt.

5. Ein Vorläufer nach einem der vorstehenden Ansprüche, wobei die Menge des copolymerisierten Photovernetzers vom Typ (II) 0,18 bis 0,7 Gewichtsteile pro 100 Gewichtsteile des Polymers auf Acrylatbasis beträgt.

6. Ein Vorläufer nach einem der vorstehenden Ansprüche, wobei die Menge des copolymerisierten wasserstoffabgebenden Monomers 0,1 bis 3 Gewichtsteile pro 100 Gewichtsteile des Polymers auf Acrylatbasis beträgt.

7. Ein Vorläufer nach einem der vorstehenden Ansprüche, wobei der copolymerisierte Photovernetzer vom Typ (II) ausgewählt ist aus der Gruppe bestehend aus monoethylenisch ungesättigten aromatischen Ketonen, und vorzugsweise ausgewählt ist aus der Gruppe bestehend aus Para-Acryloxybenzophenon (ABP), Para-Acryloxyethoxybenzophenon (AEBP), Para-N-(methylacryloxyethyl)-carbamoylethoxybenzophenon, 4-Acryloyloxydiethoxy-4-chlorbenzophenon, Para-Acryloxyacetophenon, Ortho-Acrylamidoacetophenon, acrylierten Anthrachinonen und beliebigen Kombinationen davon.

8. Ein Vorläufer nach einem der vorstehenden Ansprüche, wobei das copolymerisierte wasserstoffabgebende Monomer ausgewählt ist aus der Gruppe bestehend aus (Meth)acrylamid, (Meth)acrylatmonomeren, die mindestens eine stickstofffunktionelle Gruppe enthalten, Urethan(meth)acrylatmonomeren, die mindestens eine stickstofffunktionelle Gruppe enthalten, vinylischen Monomeren, die mindestens eine stickstofffunktionelle Gruppe enthalten, und Kombinationen davon.

9. Ein Vorläufer nach einem der vorstehenden Ansprüche, wobei das copolymerisierte wasserstoffabgebende Monomer ausgewählt ist aus der Gruppe bestehend aus N,N-Dimethyl(meth)acrylamid; N,N-Diethyl(meth)acrylamid; N-Vinylcaprolactam; N-Vinylpyrrolidon; N-Isopropyl(meth)acrylamid, N,N-Dimethylaminoethyl(meth)acrylate; 2-[[(Butylamino)carbonyl]oxy]ethyl(meth)acrylat; N,N-Dimethylaminopropyl(meth)acrylamid; N,N-Diethylaminopropyl(meth)acrylamid; N,N-Diethylaminoethyl(meth)acrylat; N,N-Dimethylaminopropyl(meth)acrylat; N,N-Diethylaminopropyl(meth)acrylat; N,N-Dimethylaminoethyl(meth)acrylamid; N,N-Diethylaminoethyl(meth)acrylamid; (Meth)acryloylmorpholin, Vinylacetamid und beliebigen Kombinationen oder Mischungen davon; vorzugsweise ist das copolymerisierte wasserstoffabgebende Monomer ausgewählt aus der Gruppe bestehend aus N,N-Dimethylacrylamid; N,N-Dimethylaminoethyl(meth)acrylat; N,N-Diethylaminoethyl(meth)acrylat, Vinylacetamid und beliebigen Kombinationen oder Mischungen davon.

10. Ein Klebstoff, umfassend eine vernetzte Form eines Vorläufers nach einem der vorstehenden Ansprüche.

11. Ein Gegenstand, umfassend einen Vorläufer nach einem der Ansprüche 1 bis 9 oder einen Klebstoff nach Anspruch 10.

12. Der Gegenstand nach Anspruch 11, ferner umfassend eine oder mehrere Klebstoffflächen.

13. Der Gegenstand nach Anspruch 11 oder 12, wobei der Gegenstand ein Klebeband ist.

14. Der Gegenstand nach Anspruch 11 oder 12, wobei der Gegenstand ein Aufkleber ist.

15. Der Gegenstand nach einem der Ansprüche 11 bis 14, wobei der Gegenstand ferner eine Trennfolie umfasst.

## Revendications

1. Précurseur d'adhésif sensible à la pression réticulable par rayonnement comprenant :
a) un polymère à base d'acrylate
b) un agent de photoréticulation copolymérisé de type (II), en une quantité supérieure à 0,1 partie en poids pour 100 parties en poids de polymère à base d'acrylate ;
c) un monomère donneur d'hydrogène copolymérisé ; et
d) une résine poisseuse hydrocarbonée, en une quantité supérieure à 40 parties en poids pour 100 parties en poids de polymère à base d'acrylate,
et dans lequel soit la teneur totale en acide de a), b) et c) vaut zéro soit la teneur totale en acide de a), b) et c) est supérieure à zéro et n'excède pas 3 %, dans lequel la « teneur totale en acide » de a), b) et c) désigne le pourcentage en poids de monomères polymérisés portant un fragment acide de tous parmi a), b) et c) et le terme « teneur en acide » désigne la teneur totale de monomères polymérisés portant un fragment acide.

2. Précurseur selon la revendication 1, dans lequel l'agent de photoréticulation copolymérisé de type (II) est un co-monomère dans un polymère de réticulation qui est distinct du polymère à base d'acrylate.

3. Précurseur selon une quelconque revendication précédente, dans lequel le monomère donneur d'hydrogène copolymérisé est un co-monomère dans un polymère de réticulation qui est distinct du polymère à base d'acrylate.

4. Précurseur selon l'une quelconque des revendications précédentes, dans lequel la quantité de résine poisseuse hydrocarbonée est supérieure à 80 parties en poids de polymère à base d'acrylate.

5. Précurseur selon l'une quelconque des revendications précédentes, dans lequel la quantité de l'agent de photoréticulation copolymérisé de type (II) va de 0,18 à 0,7 partie en poids pour 100 parties en poids du polymère à base d'acrylate.

6. Précurseur selon l'une quelconque des revendications précédentes, dans lequel la quantité du monomère donneur d'hydrogène copolymérisé va de 0,1 à 3 parties en poids pour 100 parties en poids du polymère à base d'acrylate.

7. Précurseur selon l'une quelconque des revendications précédentes, dans lequel l'agent de photo-réticulation de type (II) copolymérisé est choisi dans le groupe constitué de cétones aromatiques à mono-insaturation éthylénique et est de préférence choisi dans le groupe constitué de para-acryloxybenzophénone (ABP), para-acryloxyéthoxybenzophénone (AEBP), para-N-(méthylacryloxyéthyl)-carbamoyléthoxybenzophénone, 4-acryloyloxydiéthoxy-4-chlorobenzophénone, para-acryloxyacétophénone, ortho-acrylamidoacétophénone, anthraquinones acrylées, et n'importe quelles combinaisons de ceux-ci.

8. Précurseur selon l'une quelconque des revendications précédentes, dans lequel le monomère donneur d'hydrogène copolymérisé est choisi dans le groupe constitué de (méth)acrylamide, monomères (méth)acrylate contenant au moins un groupe fonctionnel azote, monomères (méth)acrylate d'uréthane contenant au moins un groupe fonctionnel azote, monomères vinyliques contenant au moins un groupe fonctionnel azote, et des combinaisons de ceux-ci.

9. Précurseur selon l'une quelconque des revendications précédentes, dans lequel le monomère donneur d'hydrogène copolymérisé est choisi dans le groupe constitué de N,N-diméthyl-(méth)acrylamide ; N,N-diéthyl-(méth)acrylamide ; N-vinyl-caprolactame ; N-vinylpyrrolidone ; N-isopropyl-(méth)acrylamide ; (méth)acrylate de N,N-diméthylaminoéthyle ; (méth)acrylate de 2-[[(butylamino)carbonyl]oxy]éthyle ; N,N-diméthylaminopropyl-(méth)acrylamide ; N,N-diéthylaminopropyl-(méth)acrylamide ; (méth)acrylate de N,N-diéthylaminoéthyle ; (méth)acrylate de N,N-diméthylaminopropyle ; (méth)acrylate de N,N-diéthylaminopropyle ; N,N-diméthylaminoéthyl-(méth)acrylamide ; N,N-diéthylaminoéthyl-(méth)acrylamide ; (méth)acryloyl-morpholine, vinylacétamide et n'importe quelles combinaisons ou n'importe quels mélanges de ceux-ci ; de préférence le monomère donneur d'hydrogène copolymérisé est choisi dans le groupe constitué de N,N-diméthyl-acrylamide ; (méth)acrylate de N,N-diméthylaminoéthyle ; (méth)acrylate de N,N-diéthylaminoéthyle, vinylacétamide et n'importe quelles combinaisons ou n'importe quels mélanges de ceux-ci.

10. Adhésif comprenant une forme réticulée d'un précurseur selon l'une quelconque des revendications précédentes.

11. Article comprenant un précurseur selon l'une quelconque des revendications 1 à 9 ou un adhésif selon la revendication 10.

12. Article selon la revendication 11, comprenant en outre un ou plusieurs supports à coller.

13. Article selon la revendication 11 ou 12, dans lequel l'article est un ruban.

14. Article selon la revendication 11 ou 12, dans lequel l'article est une étiquette.

15. Article selon l'une quelconque des revendications 11 à 14, dans lequel l'article comprend en outre une feuille antiadhésive.
